# EUROPEAN PATENT SPECIFICATION

(11) **EP 2 455 997 B1**
(45) Date of publication and mention of the grant of the patent: **30.08.2017**
(21) Application number: 10799613.4
(22) Date of filing: 13.07.2010
(51) Int. Cl.: H01M 4/1391, H01M 4/131, H01M 4/134, H01M 4/1395, H01M 4/38, H01M 4/62, H01M 4/66, H01M 4/75, H01G 11/26, H01G 11/40, H01G 11/20, H01M 2/10, H01M 4/04, H01M 4/139, H01M 4/1397, H01G 11/50, H01M 4/70, H01M 10/04, H01M 6/46, H01M 2/02

(54) **METHOD FOR PRODUCING A FIBER BATTERY AND A FACILITY FOR PRODUCING A FIBER BATTERY**
HERSTELLUNSGVERFAHREN FÜR EINE FASERZELLE UND EINE ANLAGE ZUR HERSTELLUNG EINER FASERZELLE
PROCEDE DE PRODUCTION DE CELLULE EN FIBRES ET INSTALLATION DE PRODUCTION DE CELLULE EN FIBRES

(30) Priority: 14.07.2009 JP 2009165568; 18.05.2010 JP 2010114076
(43) Date of publication of application: 23.05.2012
(73) Proprietor: Kawasaki Jukogyo Kabushiki Kaisha, Kobe-shi, Hyogo 650-8670 (JP); National Institute of Advanced Industrial Science and Technology, Tokyo 100-8921 (JP)
(72) Inventor: TSUTSUMI, Kazuo, Hyogo 673-8666 (JP); NISHIMURA, Kazuya, Hyogo 673-8666 (JP); TAKASAKI, Tomoaki, Hyogo 673-8666 (JP); NAKOJI, Masateru, Okazaki-shi, Aichi 444-0806 (JP); SAKAI, Tetsuo, Ikeda-shi Osaka 563-8577 (JP); SAITO, Makoto, Ikeda-shi Osaka 563-8577 (JP); YAO, Jinhan, Ikeda-shi Osaka 563-8577 (JP); MUKAI, Takashi, Ikeda-shi Osaka 563-8577 (JP)
(74) Representative: Lees, Gregory Alexander
(86) International application number: PCT/JP2010/004528
(87) International publication number: WO 2011/007549

(56) References cited:
- EP-A1- 0 716 466
- WO-A1-2006/077192
- WO-A1-2010/058574
- JP-A- 1 045 858
- JP-A- 3 206 173
- JP-A- 7 268 771
- JP-A- 8 227 726
- JP-A- 8 264 203
- JP-A- 9 248 810
- JP-A- 11 104 545
- JP-A- 11 244 009
- JP-A- 59 215 497
- JP-A- 2000 228 213
- JP-A- 2001 313 069
- JP-A- 2003 317 794
- JP-T- 2007 533 098
- US-A- 3 162 549
- US-A- 4 522 897
- US-A- 5 518 836

## Description

### [Technical Field]

The present invention relates to a fiber battery fabrication method and to an apparatus for fabricating the fiber battery. The fiber battery technology of the present invention is applicable to secondary batteries that use an aqueous solution as an electrolyte solution. Specifically, the fiber battery technology of the present invention is applicable to a nickel metal-hydride battery, nickel-cadmium battery, nickel-iron battery, nickel-zinc battery, or a lead battery. The fiber battery technology of the present invention is also applicable to secondary batteries of a nonaqueous electrolyte type, typically a lithium ion battery, and to air batteries or capacitors.

### [Background Art]

Conventional secondary batteries in which an aqueous solution is used as an electrolyte solution include a plate-shaped positive electrode, a separator, and a plate-shaped negative electrode. Generally speaking, in the case of an alkaline secondary battery, an aqueous solution, such as a caustic potash solution or a caustic soda solution in which lithium hydroxide is dissolved, is used as an electrolyte solution, and in the case of a lead battery, dilute sulfuric acid is used as an electrolyte solution.

In ordinary alkaline secondary batteries such as nickel metal-hydride batteries and nickel-cadmium batteries, an electrode having a thickness of approximately 0.65 to 0.8 mm is used as a high-capacity electrode, and an electrode having a thickness of approximately 0.3 to 0.5 mm is used as a high-power electrode.
approximately 0.3 to 0.5 mm is used as a high-power electrode.

Well-known methods used for fabricating positive electrodes of these alkaline secondary batteries include: a method in which a positive electrode active material is impregnated into a base material (i.e., sintering process); and a method in which a paste containing an active material is filled into a foamed nickel base material (i.e., paste process). In a method commonly used for fabricating negative electrodes of these alkaline secondary batteries, a paste process is performed where a current collector having a two-dimensional structure, such as a perforated metal, is coated with a paste containing an active material and then pressurized. A sintered body that is obtained by sintering carbonyl nickel to a perforated metal or the like, or a porous nickel foam obtained by removing a resin from nickel-plated resin foam through incineration, is widely used as a positive electrode current collector. Although there are publicly known porous bodies having irregularity that are formed through mechanical processing, such porous bodies have not been developed to a practical level. A method commonly used for fabricating electrodes of lead batteries is a paste process. Electrodes used in lead batteries have a greater thickness than that of electrodes used in alkaline secondary batteries.

In alkaline secondary batteries, a polyamide nonwoven fabric or a hydrophilically-processed polyolefin-based nonwoven fabric, having a thickness of approximately 80 to 200 µm, is commonly used as a separator. In lead batteries, paper, a porous polyolefin plate, or a fiberglass cloth is used as a separator. Generally speaking, lead batteries are required to contain a large amount of sulfuric acid which is directly involved in charge/discharge reactions. Therefore, a porous body used in lead batteries has a greater thickness than that of a porous body used in alkaline secondary batteries.

Conventional lithium ion secondary batteries include a plate-shaped positive electrode, a separator, and a plate-shaped negative electrode. Such a battery uses, as an electrolyte solution, an organic solvent such as ethylene carbonate (EC) or dimethyl carbonate (DMC) in which a lithium salt such as LiPF₆ is dissolved. In general, an aluminum foil to which lithium metal oxide slurry is applied is used as a positive electrode current collector, and a copper foil to which carbon material slurry is applied is used as a negative electrode current collector. A microporous polypropylene or polyethylene film having a thickness of 30 to 80 µm (i.e., a film having a large number of fine holes) is used as a separator.

Conventional electric double layer capacitors include plate-shaped positive and negative electrodes which are both formed of activated carbon having a large surface area. An electrolyte solution used in such electric double layer capacitors may be either an aqueous electrolyte solution or a nonaqueous electrolyte solution. An aqueous solution of approximately 30 wt % sulfuric acid or potassium hydroxide is used as an aqueous electrolyte solution. The use of an aqueous electrolyte solution is advantageous from the viewpoint of high-rate charging/discharging (rapid charging/discharging) since an aqueous electrolyte solution has greater ion conductivity than that of a nonaqueous electrolyte solution. However, in the case of an aqueous electrolyte solution, the operating voltage is 1.2 V, which is low, because the operating voltage is limited due to the decomposition potential of water. On the other hand, an electrolyte solution that is obtained by dissolving a salt containing tetrafluoroboric acid or an ethyl group (e.g., tetraethylammonium or tetraethylphosphonium) into an organic solvent such as propylene carbonate is used as a nonaqueous electrolyte solution. Such a nonaqueous electrolyte solution has a stable potential range wider than that of aqueous electrolyte solutions, and therefore, is applicable to capacitors that operate at high voltages of 2 to 4 V.

Air batteries, which use air as a positive electrode active material, include a cathode that serves smooth gas supply and that serves to prevent leakage and volatilization of an electrolyte solution. Electrode reactions progress at three-phase boundaries, at which the solid phase (cathode material), the liquid phase (electrolyte solution), and the gas phase (oxygen) are in contact with each other. A carbon material in which polytetrafluoroethylene (PTFE) is mixed is commonly used as a cathode. A hydrogen storage alloy, zinc, or metal lithium is used as a counter electrode. For an electrolyte solution, an organic electrolyte is used in a case where the solid phase is metal lithium, and a caustic alkali aqueous solution is used in a case where the solid phase is a hydrogen storage alloy or zinc. Although conventional air batteries have been mainly used as primary batteries, development has been actively conducted in air secondary batteries with great energy density, such as lithium-based air batteries.

The inventors of the present invention have proposed a battery structure, the conception of which is completely different from that of the above-described conventional electrode assembly which includes a positive electrode, a separator, and a negative electrode. In the proposed battery, a fibrous body having electron conductivity is used as a current collector (see Patent Literature 1). Patent Literature 1 discloses a battery which is particularly intended to realize high power.

Patent Literature 2 discloses a cord-like structure in which: one of an elongated negative electrode member and an elongated positive electrode member, each of which has an electrode active material formed on its outer periphery, is used as a core; the other electrode member is provided around the outer periphery of the core in a concentric manner, with a polymer solid electrolyte disposed between the core and the other electrode member; and these electrode members are sealed by external cladding. Patent Literature 2 discloses a structure which is fundamentally the same as the structure of a conventional Leclanché cell. In a dry battery, a positive electrode member is disposed at the center, a negative electrode member is disposed at a peripheral part, and an electrolyte is disposed between these electrode members, and the overall shape is cylindrical. Patent Literature 2 proposes a cord-like structure in which a solid electrolyte is used and which is flexible in its entirety. Patent Literature 2 does not disclose a specific electrode thickness. However, since the cord-like battery is formed with a single positive electrode and a single negative electrode, such a battery structure disclosed by Patent Literature 2 cannot realize high power.

Patent Literature 3 discloses a battery which is formed by using a fibrous body having electron conductivity. Patent Literature 3 proposes a processing method of an electric device, in which: a group of first fiber electrodes are arranged into a first layer such that the first fiber electrodes are parallel to each other in the first layer; a group of second fiber electrodes are arranged into a second layer such that the second fiber electrodes are parallel to each other in the second layer; and the second layer is positioned immediately adjacent to the first layer to form electrical connection between the electrodes. This structure prevents occurrence of short-circuiting of a storage battery, capacitor, or the like. Patent Literature 3 also aims at increasing the charging capacity of the battery per unit volume.

Patent Literature 4 discloses a fiber spreading apparatus of an air-flow type, which is capable of spreading an aggregate of fibers, which is to be processed, with high accuracy and efficiency, thereby fabricating a high-quality spread-fiber product. Patent Literature 4 aims at uniformly spreading an aggregate of fibers in a manner not to cause tangling or cutting of fibers in a fiber bundle.

Patent Literature 5 discloses a method of performing electroplating a bundle of performed on each single fiber.

Patent Literature 6 discloses a method of fabricating a metal-oxide-coated carbon fiber. This method allows characteristics of a metal oxide to be maintained, and also allows mechanical characteristics of a carbon fiber, i.e., high strength and high elastic modulus, to be maintained.

WO 2006/077192 discloses a rechargeable battery comprising a flexible elongate electron conductive core surrounded by a first electrochemically active layer, and a second electrochemically active layer, separated by a separation layer. An electron conducting element contacts the outer surface of the second electrochemically active layer. At least one of the two electrochemically active layers and the separation layer are comprised of thin-film layers.

US 5,518,836 discloses a secondary energy storage device comprising a water impermeable housing having at least two cells containing at least one shared bipolar electrode made of flexible carbon fibers. Also disclosed is a pseudo bipolar electrode and terminal electrode for use in a lithium ion battery in which the fibers or a portion of the carbon fibers are coated with an ion active lithium salt of a metal oxide.

EP 0 716 466 discloses a battery including a number of fiber anodes, a number of fiber cathodes bundled with the fiber anodes, an electrolyte between the fiber anodes and the fiber cathodes, and a tubular compliant lateral casing laterally surrounding the fiber anodes, the fiber cathodes, and the electrolyte. A compliant end plate is sealed to the lateral casing at its each end. An end of each fiber anode extends out of a first end plate at a first end of the battery. An end of each fiber cathode extends out of a second end plate at a second end of the battery. Each fiber anode comprises an anode fiber, and a layer of an anode active material overlying the anode fiber.

### [Citation List]

### [Patent Literature]

PTL 1: Japanese Laid-Open Patent Application Publication No. 2003-317794
PTL 2: Japanese Laid-Open Patent Application Publication No. 2001-110445
PTL 3: Japanese Laid-Open Patent Application Publication No. H8-227726
PTL 4: Japanese Laid-Open Patent Application Publication No. 2002-53266
PTL 5: Japanese Laid-Open Patent Application Publication No. S60-231864
PTL 6: Japanese Laid-Open Patent Application Publication No. 2002-180372

### [Summary of Invention]

### [Technical Problem]

The present invention a method of fabricating a fiber battery which is formed by using the fiber electrodes disclosed in Patent Literature 1. The present invention provides an apparatus for fabricating the fiber electrodes and the fiber battery.

In the case of a conventional plate electrode, high-power capability can be obtained by reducing the thickness of the electrode. However, if the thickness of the electrode is reduced excessively, a large number of such electrodes need to be stacked in a square-shaped battery casing, or a more elongated electrode needs to be wound up in a cylindrical battery casing. For this reason, the lower limit of the thickness of a high-power electrode is approximately 300 µm. In addition, in a plate electrode, the diffusion rate of moving ions or electrons is a rate-limiting factor. For this reason, there is a limitation in improving high-power capability. Although capacitors are originally superior to batteries in terms of high-power capability, capacitors have a small capacity.

Therefore, as disclosed in Patent Literature 1, a fiber electrode is formed, in which a fibrous material having electron conductivity is used as a current collector which serves as a path for ions or electrons, and a thin layer of a battery active material is adhered to the surface of the current collector. Use of such a fiber electrode makes it possible to create a state that is close to a state where individual particles of a powder of the active material having a large surface area are collecting electric current. Therefore, an electrode with a larger surface area can be fabricated as compared to the conventional art.

A fiber electrode is formed by coating the outer periphery of a thin fiber (a fibrous material) with a thin and uniform active material layer. The diameter of such a single fiber electrode is approximately 0.1 to 100 µm. Accordingly, an electrode that is significantly thinner than a conventional plate electrode can be formed. This makes it possible to greatly improve the charging speed and discharging speed of a battery. Assume a case where a sheet-like electrode is formed by arranging fiber electrodes, each of which has a diameter of approximately several µm, such that the fiber electrodes are parallel to each other. In such a case, an electrode with higher density than in a case where an active material is formed on a foil or a foamed base material can be realized. This consequently makes it possible to increase the capacity of a battery or a capacitor per volume.

However, considering mass manufacturing of fiber electrodes, it is inefficient if electrodes are fabricated one by one from a fiber having a diameter of approximately several µm. Therefore, although depending on the size and intended use of a battery to fabricate, it is necessary to form several hundreds to several tens of thousands of fibers into electrodes at the same time in order to efficiently fabricate a fiber battery. Moreover, in order to assemble a high-power battery by using fiber electrodes, it is necessary to interpose a thin separator between fiber electrodes, such that the fiber electrodes are arranged with a shortest possible distance therebetween.

The present invention has been made in view of the above conventional technical problems.

An object of the present invention is to provide a method of efficiently fabricating a high-power fiber battery by using a large number of fiber electrodes.

Another object of the present invention is to provide a fiber battery fabrication apparatus suitable for fabricating the fiber battery.

### [Solution to Problem]

Viewed from a first aspect, the present invention provides a fiber battery fabrication method comprising the steps of: (a) obtaining a fiber positive electrode by forming a positive electrode active material coating on a single fiber having a diameter of 0.1 to 100 µm, and obtaining a fiber negative electrode by forming a negative electrode active material coating on a single fiber having a diameter of 0.1 to 100 µm; (b) forming a separator coating on the fiber positive electrode and/or the fiber negative electrode; (c) alternately and vertically stacking the fiber positive electrodes and the fiber negative electrodes, either or both of which are coated with the separator coating; (d) vertically press-forming and cutting a stack of the fiber positive electrodes and the fiber negative electrodes, with horizontal end positions of the fiber positive electrodes and horizontal end positions of the fiber negative electrodes being displaced from each other, to obtain an electrode stack so that the fiber positive electrodes protrude from one end of the electrode stack and the fiber negative electrodes protrude from the other end of the electrode stack; (e) forming a positive electrode terminal on the protruding fiber positive electrodes; and (f) forming a negative electrode terminal on the protruding fiber negative electrodes.

Viewed from a second aspect, the present invention provides a fiber battery fabrication apparatus comprising: winding rollers around which fiber tows are wound, respectively; fiber spreading apparatuses configured to spread the fiber tows, respectively; an active material coating formation apparatus configured to obtain fiber positive electrodes and fiber negative electrodes by forming a positive electrode active material coating or a negative electrode active material coating on each of single fibers that are obtained by spreading the fiber tows, the single fibers each having a diameter of 0.1 to 100 µm; a separator coating formation apparatus configured to form a separator coating on the fiber positive electrodes and/or the fiber negative electrodes; a pressurizing cutter configured to cut the fiber positive electrodes and the fiber negative electrodes while vertically stacking and press-forming the fiber positive electrodes and the fiber negative electrodes, either or both of which have the separator coating formed thereon, with horizontal end portions of the fiber positive electrodes and horizontal end positions of the fiber negative electrodes being displaced from each other, to obtain an electrode stack; a positive electrode terminal formation apparatus configured to cause the fiber positive electrodes to protrude from one end of the electrode stack, and form a positive electrode terminal on the protruding fiber positive electrodes; and a negative electrode terminal formation apparatus configured to cause the fiber negative electrodes to protrude from the other end of the electrode stack, and form a negative electrode terminal on the protruding fiber negative electrodes.

### [Advantageous Effects of Invention]

According to the fiber battery fabrication method of the present invention, a high-power fiber battery can be efficiently fabricated by using a large number of fiber electrodes.

Moreover, the fiber battery fabrication apparatus of the present invention is suitable for efficiently fabricating a fiber battery.

### [Brief Description of Drawings]

[Fig. 1] Fig. 1 is a schematic structural diagram showing an example of a fiber battery fabrication apparatus according to an embodiment of the present invention.
[Fig. 2] Fig. 2 is a schematic structural diagram showing an example of a fiber electrode fabrication apparatus that may be used in an embodiment of the present invention.
[Fig. 3] Fig. 3 is a schematic structural diagram showing another example of the fiber electrode fabrication apparatus that may be used in an embodiment of the present invention.
[Fig. 4] Fig. 4 is a schematic structural diagram showing yet another example of the fiber electrode fabrication apparatus that may be used in an embodiment of the present invention.
[Fig. 5] Fig. 5 is a schematic structural diagram showing an example of a separator coating formation apparatus that may be used in an embodiment of the present invention.
[Fig. 6] Fig. 6 is a front view of a scraper which is included in the separator coating formation apparatus shown in Fig. 5.
[Fig. 7] Fig. 7 is a side view showing an example of a fiber electrode that may be used in an embodiment of the present invention.
[Fig. 8] Fig. 8 is a partially cutaway plan view showing another example of a fiber electrode that may be used in an embodiment of the present invention.
[Fig. 9] Fig. 9 is a cross-sectional view of the fiber electrode shown in Fig. 8.
[Fig. 10] Fig. 10 is a partially cutaway plan view showing yet another example of a fiber electrode that may be used in an embodiment of the present invention.
[Fig. 11] Fig. 11 is a cross-sectional view of Fig. 10.
[Fig. 12] Fig. 12 is a schematic structural diagram showing a pressurizing cutter which is included in the fiber battery fabrication apparatus according to an embodiment of the present invention and which is configured to cut fiber positive electrodes and fiber negative electrodes while stacking and press-forming the fiber positive electrodes and the fiber negative electrodes, either or both of which have a separator coating formed thereon.
[Figs. 13A to 13C] Figs. 13A to 13C illustrate a fiber battery fabrication method according to an embodiment of the present invention.
[Figs. 14A to 14D] Figs. 14A to 14D show examples of arrangement of fiber electrodes that are included in a fiber battery produced according to an embodiment of the present invention.
[Figs. 15A and 15B] Figs. 15A and 15B illustrate the fiber battery fabrication method according to an embodiment of the present invention.
[Figs. 16A and 16B] Figs. 16A and 16B are schematic structural diagrams showing an example of a high-capacity battery which is formed by combining a plurality of fiber batteries (unit batteries) produced according to an embodiment of the present invention.
[Fig. 17] Fig. 17 is a schematic structural diagram showing a battery module which is formed by stacking a plurality of high-capacity batteries shown in Fig. 16B.
[Fig. 18] Fig. 18 is a schematic structural diagram showing a battery module which is formed by connecting a plurality of fiber batteries (unit batteries) produced according to an embodiment of the present invention.
[Figs. 19A and 19B] Fig. 19A is a schematic structural diagram showing a battery stack which is formed by connecting a plurality of high-capacity batteries shown in Fig. 16B, and Fig. 19B is a schematic structural diagram showing a battery stack which is formed by connecting a plurality of fiber batteries (unit batteries) produced according to an embodiment of the present invention.

### [Description of Embodiments]

Hereinafter, an embodiment of the present invention is described with reference to the accompanying drawings as necessary. The present invention is not limited by the description provided below.

A fiber electrode fabrication method includes the steps of: (a) obtaining a fiber positive electrode by forming a positive electrode active material coating on a single fiber, and obtaining a fiber negative electrode by forming a negative electrode active material coating on a single fiber; and (b) forming a separator coating on the fiber positive electrode and/or the fiber negative electrode.

Preferably, the method includes (a') spreading a fiber tow into single fibers, prior to the step (a).

In the step (a'), the fiber tow, which is formed of an electrically conductive fibrous material, is spread.

Fiber positive electrodes and fiber negative electrodes are used as electrodes in the present invention. Here, not a plate-shaped current collector or a foil current collector but a thin electrically conductive fiber is used as a current collector. This makes it possible to fabricate fiber electrodes with greatly improved cycle-life performance and high-power capability. However, in order to fabricate such fiber electrodes, it is necessary to thinly and uniformly form an active material coating (active material layer) on individual fibers. Therefore, a fiber tow is spread and processed into a thin sheet-like shape and thereby a gap is formed between each fiber. This makes it possible to readily form a uniform active material coating on each fiber. A method used for spreading a fiber tow may be an air flow method in which air is blown against the fiber tow, or a method in which a vacuum pump is used to suck air surrounding the fiber tow.

A carbon fiber, a twisted thread of carbon fibers, a metal wire such as a nickel wire, a steel wire, or a metal-coated polyolefin may be used as an electrically conductive fiber. In addition, a fibrous material having insufficient resistance to oxidation and alkalis, such as a cotton thread, a silk thread, or a polyester resin thread, may be coated with a polyolefin-based resin having excellent resistance to alkalis and oxidation for the purpose of improving the resistance of the fibrous material to alkalis and oxidation, and further coated with a metal. The fibrous material with the coatings is also usable as an electrically conductive fiber. If such a metal-coated fiber is oxidized by an electrolytic method or heat treatment, then carbon or a polyolefin within the fiber is oxidized and decomposed. As a result, a porous metal fiber that is a thin hollow fiber is obtained. Such a material is also usable as an electrically conductive fiber.

In a case where an electrically conductive fiber is used as a current collector, its diameter is determined with reference to the thickness of a conventional nickel positive electrode current collector. Specifically, a positive electrode using a sintered nickel substrate or a positive electrode using a foamed nickel substrate has a thickness of 300 µm or greater. Therefore, it is preferred that the diameter of the electrically conductive fiber used in the present invention is much less than 300 µm. Accordingly, the diameter of each single fiber forming the electrically conductive fiber is 0.1 to 100 µm, and preferably, 2 to 50 µm.

If the diameter of each single fiber is less than 0.1 µm, the mechanical strength of the single fiber is insufficient. Therefore, there is a risk that the single fibers are cut due to a clamping force when they are bundled together by means of a solderless terminal, or that the single fibers are cut due to the weight of an active material deposited thereon. Further, if the diameter of each single fiber is less than 0.1 µm, its electrical conductivity is low. This may cause a difficulty in uniform deposition of the active material. On the other hand, if the diameter of each single fiber is greater than 100 µm, then the active material deposited on the single fiber tends to be distorted. Accordingly, there is a risk of reduction in cycle-life performance.

In order to render the surface of the fibrous material electrically conductive, or in order to improve the electrical conductivity of the fibrous material, forming a metal coating on each single fiber obtained in the step (a') may be performed between the step (a') and the step (a). For an alkaline secondary battery, it is preferred that a nickel-coated fibrous material is used as a current collector. In the case of using an insulating fiber such as a polyolefin fiber as a current collector, it is preferred that the fiber is plated with nickel by electroless plating, and if necessary, electrolytic nickel plating is performed on the fiber in addition to the electroless nickel plating. The fiber with the plating(s) is used as a current collector. In the case of using a carbon fiber or a steel wire as a fibrous material, although the fibrous material is electrically conductive, the conductivity of the surface of the fibrous material can be further improved by uniformly coating individual fibers with nickel through electrolytic plating.

Preferably, the amount of the plating is such that the thickness of a nickel plating coating (nickel plating layer) formed by the plating is in the range of 0.1 to 15 µm, and more preferably, in the range of 0.3 to 10 µm. In the case of expecting high-power capability, it is preferred that the nickel plating layer is thick. Considering economic efficiency, setting the plating layer thickness to approximately 0.3 to 3 µm will suffice from a practical standpoint. In the case of an air battery, a hollow nickel fiber is applicable.

Electroless nickel plating is a method in which nickel metal deposition is performed through chemical reduction action. This method does not require application of an electric current. Therefore, with this method, a nickel coating having a uniform thickness can be formed on a fibrous material even if the fibrous material has insufficient electrical conductivity, or the fibrous material is an insulating fibrous material having a complex and intricate shape. Accordingly, if a thin nickel coating is formed on a fiber tow such as a carbon fiber by electroless nickel plating prior to performing electrolytic nickel plating thereon, then the thin nickel coating may be used as an undercoating for forming a nickel plating layer with improved thickness uniformity. Furthermore, since the electrical conductivity of the surface of the carbon fiber is improved with this method, plating efficiency at the time of applying electrolytic nickel plating is improved. This makes it possible to realize efficient mass manufacturing.

In the case of performing electroless nickel plating on a carbon fiber, the following well-known method may be used: a nickel-phosphorus alloy plating (containing 5 to 12 % of phosphorus) deposition method in which nickel sulfate is used as a main component of a plating solution and a hypophosphite is added to the solution as a reductant; or a nickel-boron alloy plating (containing 0.2 to 3 % of boron) deposition method which utilizes reduction action of dimethylamine borane.

In the case of using a fibrous material as a lithium ion battery current collector, by plating the surface of the fibrous material with a metal coating, the electrical conductivity of the current collector is improved and battery characteristics such as high-rate charge/discharge capability and cycle-life performance are improved. The metal used for plating the fibrous material needs to be chemically stable in the operating voltage range of a lithium ion battery. In this respect, it is preferred in the case of a lithium ion battery that the positive electrode is plated with aluminum and the negative electrode is plated with copper or nickel.

Electrolytic plating with aluminum is difficult to perform in a plating bath of an aqueous solution type since aluminum has great affinity for oxygen, and the oxidation-reduction potential of aluminum is lower than that of hydrogen. Therefore, it is desired that electrolytic plating with aluminum is performed in a plating bath of a non-aqueous solution type (e.g., organic solvent type or ionic liquid type). For example, an existing plating bath that uses a room temperature molten salt can be used. Examples of the room temperature molten salt used in the plating bath include: AlCl₃-1-ethyl-3-methylimidazolium chloride (AlCl₃-EMIC) room temperature molten salt; AlCl₃-1-n-butylpyridinium chloride (AlCl₃-BPC) room temperature molten salt; and other room temperature molten salts each consisting of AlCl₃ and a quaternary ammonium salt that is represented by the following general formula: [(R¹)₃N+R²]X-(wherein R¹ is an alkyl group containing 1 to 12 carbon atoms, R² is an alkyl group containing 1 to 12 carbon atoms, and X is a halogen atom).

Methods used for copper plating include an electrolytic plating method and an electroless plating method. Similar to the case of nickel plating, a uniform copper plating coating can be formed on the surface of a fibrous material, by applying an electroless plating method and then applying an electrolytic plating method.

In the step (a), a positive electrode active material coating or a negative electrode active material coating is formed on each single fiber which is obtained by spreading the fiber tow. In this case, a thin, uniform, and tubular positive or negative electrode active material coating, which is an oxide, hydroxide, or metal coating, can be formed on each single fiber by an electrodeposition method or an electroplating method. Sheet-like fibers, which are obtained by spreading the fiber tow into a thin sheet-like shape in the step (a'), are each exposed to cathodic polarization by being immersed in a bath together with a counter electrode. As a result, a hydroxide and/or an oxide are directly deposited on each fiber.

For example, a tubular nickel hydroxide coating can be formed on single fibers of the sheet-like fiber tow by exposing the sheet-like fiber to cathodic polarization in a nickel nitrate aqueous solution. Then, by disposing a terminal at the sheet-like fiber on which the nickel hydroxide coating is formed, the sheet-like fiber is made into a fiber nickel hydroxide electrode. The fiber nickel hydroxide electrode can be used as a positive electrode for use in a battery such as a nickel metal-hydride battery that uses a caustic alkali aqueous solution as an electrolyte solution.

A tubular manganese hydroxide coating can be formed on single fibers of the sheet-like fiber tow by exposing the sheet-like fiber to cathodic polarization in a manganese nitrate aqueous solution. The manganese hydroxide coating is transformed into a Mn₃O₄ coating when heated and dried in a thermostatic chamber in which the temperature is approximately 50 to 200 °C. The Mn₃O₄ coating is transformed into a lithium manganese oxide coating when exposed to hydrothermal treatment at 100 to 250 °C in a lithium ion containing solution in a sealed system under presence of an oxidant or a reductant. By disposing a terminal at the sheet-like fiber on which the lithium manganese oxide coating is formed, the sheet-like fiber is made into a fiber lithium manganese oxide electrode. The fibrous lithium manganese oxide electrode can be used as a fiber positive electrode for use in a lithium ion battery.

In a similar manner, an iron hydroxide negative electrode for use in a nickel-iron battery or a zinc hydroxide negative electrode for use in a nickel-zinc battery can be obtained. A fibrous material on which tin, or an alloy of copper and tin, is deposited can be used as a negative electrode for use in a lithium ion battery.

A solid electrolyte for use in a lithium ion battery can be obtained through, for example, Li₃PO₄ electrodeposition. Li₃PO₄ is deposited on a carbon fiber by immersing the carbon fiber in an aqueous solution in which lithium nitrate (LiNO₃) and sodium phosphate (NaH₂PO₄) are mixed, and performing electrodeposition treatment on the carbon fiber. Li₃PO₄ has an insulating property and lithium ion conductivity. Therefore, if a carbon fiber is coated with a Li₃PO₄ coating, then Li₃PO₄ acts as both a separator and an electrolyte. A carbon fiber can directly act as a fiber negative electrode. Therefore, a stacked body of a fiber negative electrode and a separator can be obtained by coating a carbon fiber with a Li₃PO₄ coating. Here, by adding aluminum nitrate or nickel nitrate to the electrolytic bath, a Li₃₋ₓMₓPO₄ (M = Al or Ni) coating in which lithium is partially replaced by aluminum or nickel can be formed. This Li_{3-X}M_{X}PO₄ coating indicates much better ion conductivity than Li₃PO₄ in which lithium is not partially replaced by aluminum or nickel. The solid electrolyte may be used in combination with an electrolyte solution.

Preferably, the deposition amount of an active material is such that the thickness of an active material coating formed by an electrodeposition method is in the range of 0.5 to 30 µm, and more preferably, in the range of 1 to 10 µm. If an emphasis is put on improving high-power capability, it is preferred that a thin active material coating is formed such that the thickness of the active material coating is 5 µm or less. On the other hand, if an emphasis is put on increasing the capacity, the active material coating may be thicker than 5 µm. If the thickness of the active material coating is less than 0.5 µm, then the battery capacity per unit volume is reduced excessively. As a result, it becomes necessary to increase the size of a battery container in order to secure a necessary capacity. This is unfavorable. On the other hand, if the thickness of the active material coating is more than 30 µm, the active material coating becomes, for example, adhered to the active material coating of an adjacent fiber. This adhesion causes an uneven and thick active material coating, resulting in a lump of the active material coating of which the current collecting ability is insufficient. In a case where the active material coating is, for example, an oxide coating and its electrical conductivity is not very high, there arises a problem of low active material utilization.

In the step (b), a separator coating is formed on the surface of the fiber electrode(s) on which an active material coating has been formed on the step (a). Since the fiber electrodes fabricated through the steps (a') and (a) are in a sheet-like shape, a sheet-like separator used together with a plate electrode in a conventional battery may be formed thereon. Specifically, a polyamide nonwoven fabric or a hydrophilically-processed polyolefin-based nonwoven fabric may be formed into a separator in the case of an alkaline secondary battery. Paper, a porous polyolefin plate, or a fiberglass cloth may be formed into a separator in the case of a lead battery. A polypropylene microporous film or a polyethylene microporous film (i.e., a film having a large number of fine holes) may be formed into a separator in the case of a lithium ion battery. A battery can be formed by interposing such a separator between a sheet-like fiber positive electrode and a sheet-like fiber negative electrode. Alternatively, a battery can be formed by forming either the positive electrode or the negative electrode in the form of a fiber electrode, and using a conventional plate electrode as a counter electrode of the fiber electrode.

Since the electrodes herein are not plate-shaped but fibrous, the surface area of the electrodes is significantly large, and it is expected that the chemical reactivity of the electrodes is greatly improved as compared to plate electrodes. In a battery using an aqueous electrolyte solution, such as a nickel metal-hydride battery, a nickel iron battery, a nickel zinc battery, or a nickel-cadmium battery, electrolyte solution resistance is relatively low. Accordingly, reactivity is improved by using a fiber electrode having a large surface area. Therefore, even if a fiber electrode is used together with a conventional separator or a plate-shaped counter electrode, high-power capability can be obtained to some extent. For example, a battery can be formed by using: a fiber nickel hydroxide positive electrode; a publicly known plate-shaped hydrogen storage alloy negative electrode (e.g., MmNi_{3.65}Co_{0.75}Mn_{0.4}Al_{0.3} wherein Mm is mischmetal (i.e., rare earth mixture) as a counter electrode; and a hydrophilically-processed polypropylene nonwoven fabric separator that has a thickness of approximately 100 µm and that is disposed between the positive electrode and the counter electrode.

However, in the case of a lithium ion battery, unlike a nickel metal-hydride battery, great improvement in high-power capability cannot be expected when merely using a fiber electrode together with a conventional separator or a plate-shaped counter electrode, because the electrolyte solution resistance of a lithium ion battery is greater than that of a battery using an aqueous electrolyte solution. High-power capability can be effectively improved by obtaining an electrode/separator stacked body through formation of a thin separator coating on the surface of fiber electrodes, thereby increasing a separator surface area in addition to an electrode surface area and reducing an inter-electrode distance to reduce a moving distance of lithium ion.

The following method may be applied to form a separator: spreading slurry of an insulating polymer having ion permeability thinly and uniformly on a flat substrate; and forming a polymer coating on the surface of a sheet-like fiber electrode (a fiber positive electrode and/or a fiber negative electrode).

For example, a polymer material for a separator is dissolved in a solvent to form slurry. The slurry is applied to a fiber electrode on a flat glass substrate or on a polyethylene sheet which is release-treated on one side. The slurry is then passed through a scraper (e.g., a slit formed by doctor blades), and thereby formed into a coating film having a uniform thickness. Then, the glass substrate is heated, or the fiber electrode to which the slurry is applied is exposed to warm air, so that the slurry is dried within a short period of time. In this manner, a thin film having ion permeability can be formed on the fiber electrode. With this method, a very thin separator coating that is as thin as the fiber electrode can be formed. This makes it possible to significantly reduce an inter-electrode distance.

A separator coating can be formed on the surface of the fiber electrode also in the following manner: the solvent is removed to some extent from the slurry of the polymer material for the separator, which has been applied onto the sheet-like fiber electrode; and the sheet-like fiber electrode is exposed to pressure bonding before the slurry is fully dried. Although depending on the polymer type or the solvent type, the concentration of the polymer in the slurry is as described below. For example, in the case of polyvinyl alcohol (PVA), slurry in which the concentration of PVA is adjusted to approximately 5 to 10 wt % is formed, and a coating of the slurry having a uniform thickness is formed on the sheet-like fiber electrode by using a scraper. Thereafter, at the time of exposing the sheet-like fiber electrode to pressure bonding, it is preferred that approximately 50 to 80 wt % of moisture has been evaporated from the slurry. If the sheet-like fiber electrode is in such a state, there is a low possibility that the sheet-like fiber electrode penetrates the polymer separator coating and is exposed when the fiber electrode is exposed to pressure bonding, and also the adhesion between the polymer separator coating and the sheet-like fiber electrode is maintained at a favorable level.

In the case of low moisture evaporation amount, i.e., a case where the amount of evaporation of moisture from the slurry is less than 50 wt %, the polymer separator coating tends to be damaged at the time of pressure bonding. If the moisture evaporation amount is more than 80 wt % (i.e., a residual moisture amount is less than 10 %), then the polymer separator coating has sufficient strength. In this case, however, adhesion between the sheet-like fiber electrode and the separator coating (polymer coating) is insufficient.

A thin polymer film may be formed in advance, and the film may be affixed to a fiber surface. In this case, the separator film may be placed on one or both faces of a fiber electrode, and the fiber and the film(s) may be roller-pressed and thereby adhered to each other. The roller pressing may be performed at an ordinary temperature. However, if the roller pressing is performed at such an increased temperature that the polymer is almost softened, then the adhesion between the fiber and the film(s) is increased.

A pressing machine different from a roller pressing machine may be used. For example, a flat hot press machine or a flat cold press machine may be used. In an alternative manner, the fiber and the film(s) may be, after being heated, rolled out by using a cold press machine.

The polymer used as a separator material has ion permeability and insulating property. The polymer can be used without specific restriction so long as the polymer has resistance to oxidation and electrolyte solution. For example, polyvinyl alcohol (PVA), styrene-ethylene-butylene-styrene block copolymer (SEBS), polyvinylidene fluoride (PVdF), polytetrafluoroethylene (PTFE), polyethersulfone (PES), polysulfone (PS), ethylene vinyl acetate (EVA), polypropylene (PP), or polyethylene (PE) can be used as a separator material. When using such a polymer film, the film needs to be formed into a porous film, or a filler needs to be added to the film for improving its hydrophilicity.

A specific example of a method applicable to form such a porous film is to form an ultrafiltration membrane by immersing, in a solvent having high affinity for the solvent of the slurry, a fiber electrode to which the slurry of the polymer material for the separator is applied. For example, a toluene solution in which SEBS is dissolved is applied to a fiber electrode, which is then immersed in acetone. In this case, SEBS is not dissolved in acetone, but toluene is dissolved in acetone. As a result, a SEBS film is formed, which has a large number of holes formed thereon due to toluene extraction. Similarly, a porous PVA film can be formed by applying a PVA aqueous solution to a fiber electrode and then immersing the fiber electrode in ethanol. It should be noted that ion permeability of a PVA film, which is a hydrophilic film, can be improved by forming the PVA film into a porous film.

In the case of using a flat hot press machine or a flat cold press machine as described above, if the polymer is heated excessively, then there is a possibility that the softened polymer causes blockage of the holes. For this reason, proper temperature adjustment is necessary.

Another porous film forming method is as follows: a powder of an alkali-soluble oxide such an oxide of silicon, magnesium, calcium, or bismuth is added to the slurry of the polymer material; then a fiber electrode is immersed in the slurry or the slurry is applied to the fiber electrode, and thereby a separator precursor is suitably formed on the electrode; the separator precursor is dried and then the electrode is immersed in a caustic alkaline aqueous solution at 80 to 120 °C; accordingly, the alkali-soluble oxide is dissolved in the caustic alkaline aqueous solution; as a result, a porous polymer film having ion permeability is formed; the caustic alkaline aqueous solution is washed away from the porous polymer film with water; and then the film is dried. In this manner, a porous separator can be obtained.

Preferably, the mass median diameter, D50, of the particles of the alkali-soluble oxide added to the slurry of the polymer material is 2 µm or less. The amount of the added oxide is preferably 1 to 50 wt % of the polymer weight. More preferably, the amount of the added oxide is 10 to 30 wt % of the polymer weight. If the amount of the added oxide is less than 1 wt % of the polymer weight, then the film's porosity and affinity for electrolyte solution tend to be insufficient, resulting in decreased ion permeability of the separator. On the other hand, if the amount of the added oxide is more than 50 wt % of the polymer weight, then the strength of the film tends to decrease. Therefore, if a fiber electrode on which such a film is formed and a counter electrode are stacked and pressed together, there is an increased possibility of short-circuiting.

In the case of using PP or PE, solvents in which PP or PE is dissolvable are limited since PP and PE are highly chemical-resistant. A separator film can be formed by using a solution in which PP or PE is dissolved. Also, a separator film may be formed in the following alternative method: PP or PE resin is melted at a temperature higher than or equal to its melting point (140 to 170 °C or higher in the case of PP, and 100 to 115 °C or higher in the case of PE); an alkali-soluble oxide such as SiO₂ is added to the melted resin; and then, a film is formed on a substrate by passing the resin through a scraper. Before the resin is cooled down and solidified, a fiber electrode is adhered to the resin, and thereby a fiber electrode/separator stacked body is formed. Then, SiO₂ is dissolved in a caustic alkali. In this manner, a microporous film may be formed.

In the case of an alkaline secondary battery, a separator coating may be formed by using, for example, polyvinyl alcohol (PVA) which is water-soluble and from which a film can be readily formed. A separator coating may be formed also by forming a porous film such as a PP film or PE film on a fiber electrode for use in a lithium ion battery.

If it is difficult to form an active material coating on a fiber by using an electroplating method or electrodeposition method, an alternative method may be used, in which a metal alkoxide is used to form a thin oxide coating or thin hydroxide coating. The metal alkoxide herein refers to a compound, in which the hydrogen of the hydroxyl group of an alcohol molecule is replaced by a metal atom and which is represented by the following general formula: M(OR)ₙ (M: metal, R: alkyl group, n: the oxidation number of a metal element). Alkali metals, alkaline-earth metals, transition metals, rare earth elements, and various elements in groups 13 to 16 of the periodic table may form metal alkoxides. By hydrolyzing such a metal alkoxide through a reaction with water, a metal oxide layer can be formed on a fiber surface.

If a metal oxide formed by a method as described above has an excellent insulating property and excellent ion permeability, then the method can also be used as a method of forming a separator. For example, nickel hydroxide is electrodeposited on a fiber, and then a thin film of zirconia is formed thereon. The zirconia thin film can be used as a separator.

If it is difficult to form an active material coating on a fiber by using an electroplating method or electrodeposition method, a co-deposition plating method may be used.

Assume a case where electrodeposition or plating is performed in an electrodeposition bath, electroplating bath, or electroless plating bath in which poorly-soluble fine particles are dispersed. In such a case, the fine particles are co-deposited with an oxide, hydroxide, or metal, and a composite plating layer is obtained, accordingly. In the composite plating layer, the fine particles are dispersed within the oxide, hydroxide, or metal, which is a main component. This method is called co-deposition plating or dispersion plating. For example, in the case of depositing an oxide active material that has relatively low electrical conductivity, co-deposition may be performed by dispersing a metal powder or carbon powder, which acts as a conductive assistant, in a bath. As a result, a fiber electrode is obtained, in which the conductive assistant is dispersed within the active material. Here, a binder agent such as PTFE may be dispersed within the active material for the purpose of improving the adhesion strength of the active material. A water-soluble polymer such as PVA or CMC (carboxymethyl cellulose) may be used as a surfactant for dispersing a hydrophobic carbon powder within water. In addition, since such a water-soluble polymer is co-deposited with an active material or carbon, the water-soluble polymer is expected to act as a binder.

Moreover, if it is difficult to form an active material coating on a fiber by using an electroplating method or electrodeposition method, the separator coating formation method performed in the step (b) may be applied. The method is applicable, for example, to a hydrogen storage alloy used as a nickel metal-hydride battery negative electrode, to silicon (Si) or silicon monoxide (SiO) used as a lithium ion battery negative electrode, and to V₂O₅ or sulfur used as a lithium ion battery positive electrode. The separator coating formation method is also applicable to activated carbon used as a capacitor electrode material or as an air battery cathode, and to a metal oxide used as a capacitor electrode material (ruthenium oxide or iridium oxide). Further, the separator coating formation method is applicable in a case where metal lithium is used as an electrode.

To be specific, a fine powder of a positive electrode active material or a negative electrode active material is mixed into a solvent such as water together with a binder, a thickener, or a conductive assistant, and thereby slurry is formed. The slurry is applied to a sheet-like fiber electrode placed on a flat glass substrate, or on a polyethylene or polyester sheet which is release-treated on one side. The slurry is then passed through a scraper such as a scraper formed by doctor blades, and thereby formed into a slurry coating having a uniform thickness. Then, the glass substrate is heated, or warm air is blown against the slurry coating, so that the slurry is dried within a short period of time. In this manner, a positive electrode active material coating or a negative electrode active material coating, which is a thin coating, can be formed on the sheet-like fiber electrode. Although the sheet-like fiber electrode in this state can act as a fiber electrode, press forming may be further performed on the sheet-like fiber electrode. The press forming allows adhesion to be improved between the active material and the fibrous material which acts as a current collector.

Next, a sheet-like fiber electrode assembly is formed by alternately stacking a stacked body, fabricated as described above, of a sheet-like fiber positive electrode and a separator, and a sheet-like fiber negative electrode (or by alternately stacking the stacked body of the sheet-like fiber positive electrode and the separator, and a stacked body of a sheet-like fiber negative electrode and a separator). Here, sheet-like fiber positive electrodes and sheet-like fiber negative electrodes are already in such a state that a separator coating is formed on each sheet-like fiber positive electrode and/or on each sheet-like fiber negative electrode. Therefore, one sheet-like electrode and another sheet-like electrode acting as a counter electrode of the one sheet-like electrode are stacked alternately and then pressed together. In this manner, a sheet-like fiber electrode assembly formed of sheet-like fiber positive electrodes, separators, and sheet-like fiber negative electrodes is obtained. At the time of stacking the sheet-like fiber electrodes, horizontal end positions of the respective sheet-like fiber positive electrodes are displaced, by approximately 0.01 to 5 mm, from horizontal end positions of the respective sheet-like fiber negative electrodes. This makes it easy to form terminals.

When forming terminals of the press-formed fiber electrode assembly, terminals can be formed by welding metal plates to positive and negative electrode sides, respectively, of the electrode assembly or by bringing metal plates into contact with, and then pressing the metal plates against, the fiber electrodes from both the sides. However, in the case of bringing the metal plates as terminals into contact with an electrode, if the sheet-like fiber positive electrodes and the sheet-like fiber negative electrodes are in a simply stacked state, then there is a possibility that a metal plate also comes into contact with a counter electrode, causing short-circuiting. In order to prevent such short-circuiting, it is preferred to use the following method: a positive electrode terminal portion and a negative electrode terminal portion of the electrode assembly are sealed with resin; thereafter, the resin is ground by a cutter or a grinder until the positive electrode terminal portion and the negative electrode terminal portion are exposed; and metal plates are held to the exposed positive electrode and negative electrode terminal portions, respectively, to perform pressing from both sides. The resin used here can be used without specific restriction, so long as the resin has excellent resistance to electrolyte solution and an excellent insulating property. The above-described polymer material having an excellent insulating property, or a commercially available synthetic adhesive having excellent resistance to electrolyte solution and an excellent insulating property, may be used as the resin. Here, if a fibrous nickel metal-hydride battery is to be formed, carboxymethyl cellulose (CMC), PVA, or PVP (polyvinylpyrrolidone) may be used as a polymer having ion permeability.

In the case of fabricating an air battery, activated carbon is applied onto a hollow nickel fiber which is used as a cathode. A separator coating is formed on the surface of the cathode; and then a fiber negative electrode is placed thereon, or a thin negative electrode active material coating is formed on the separator coating in the same manner as applying the separator. By further coating the negative electrode with a metal such as nickel or copper, a negative electrode terminal can be readily formed.

The press-formed fiber electrode assembly is inserted in an electrolytic bath, and an electrolyte solution is injected thereinto. In this manner, a fiber battery or a fiber capacitor can be formed. In the case of an air battery, an electrolyte solution is disposed inside a hollow fiber, or disposed at a separator or at a negative electrode. When letting air through at the time of discharging, the electrolyte solution is pushed out of the inside of the hollow fiber. As a result, three-phase boundaries are formed among the solid phase (cathode), the gas phase (air), and the liquid phase (electrolyte solution), and electrode reactions occur.

### [Examples]

### (1) Fiber Battery Fabrication Apparatus

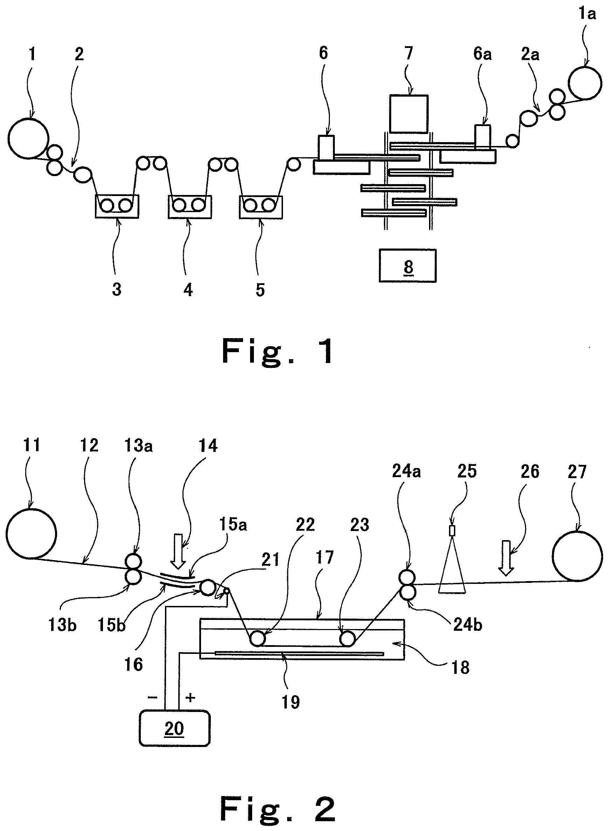

Fig. 1 is a schematic structural diagram showing an example of a fiber battery fabrication apparatus. In Fig. 1, the reference sign 1 denotes a winding roller around which a tow of multiple polyacrylonitrile (PAN)-based carbon fibers is wound in a rolled-up manner; the reference sign 2 denotes a fiber spreading apparatus configured to spread a carbon fiber aggregate, that is, the tow of multiple carbon fibers, in preparation for a next step; the reference sign 3 denotes a plating bath; the reference sign 4 denotes an electrolytic bath; the reference sign 5 denotes an alkali tank; the reference sign 6 denotes a separator coating formation apparatus; the reference sign 7 denotes a pressurizing cutter configured to cut fiber positive electrodes and fiber negative electrodes while stacking and press-forming the fiber positive electrodes and the fiber negative electrodes, either or both of which have a separator coating formed thereon; the reference sign 8 denotes a positive and negative electrode terminal formation apparatus; the reference sign 1a denotes a winding roller around which a tow of multiple PAN-based carbon fibers is wound in a rolled-up manner; the reference sign 2a denotes a fiber spreading apparatus configured to spread a carbon fiber aggregate, that is, the tow of multiple carbon fibers, in preparation for a next step; and the reference sign 6a denotes a separator coating formation apparatus. The fiber spreading apparatuses 2 and 2a have the same structure, and the separator coating formation apparatuses 6 and 6a have the same structure.

### (2) Example 1 of Fiber Electrode Fabrication Method

Fig. 2 is a schematic structural diagram showing an example of a fiber electrode fabrication apparatus. A fibrous nickel hydroxide positive electrode for use in an alkaline secondary battery was fabricated by using the fiber electrode fabrication apparatus as shown in Fig. 2. In Fig. 2, the reference sign 11 denotes a winding roller around which a carbon fiber tow 12 formed of 12000 PAN-based carbon fibers (each having a diameter of 6 µm) is wound in a rolled-up manner. The PAN-based carbon fiber tow 12 is unwound from the winding roller 11 and passes through a pair of upper and lower guide rollers 13a and 13b. Then, compressed air 14 compressed by a compressor (not shown) is blown against the carbon fiber tow 12. As a result, the carbon fiber tow is spread, so that the width thereof is increased from 1 cm, which is the original width, to 5 cm. The reference signs 15a and 15b denote air diffuser plates for diffusing the compressed air in the width direction of the carbon fiber tow. The air diffuser plates are each provided with a plurality of comb-like slits so that the compressed air 14 will be uniformly applied to the carbon fiber tow in the width direction.

The PAN-based carbon fiber tow 12, after being spread, reaches an electrolytic bath 17 through a roller 16. The electrolytic bath 17 is filled with a nickel nitrate aqueous solution 18, in which the nickel nitrate concentration is 1 mol/liter. A nickel plate 19 having a thickness of 2 mm is placed at the bottom of the electrolytic bath 17. The nickel plate 19 is connected to a positive electrode terminal of a DC power supply 20. A negative electrode terminal of the DC power supply 20 is in contact with the PAN-based carbon fiber tow 12 via a roller 21. The PAN-based carbon fiber tow 12 in the electrolytic bath 17 is moved out of the bath through rollers 22 and 23. The fiber tow 12 further passes through a pair of upper and lower guide rollers 24a and 24b. Thereafter, a spray 25 sprays mist water on the fiber tow 12. The PAN-based carbon fiber tow 12 is washed with the water sprayed thereon, and then dried by air 26 blown from a fan (not shown). Thereafter, the PAN-based carbon fiber tow 12 is wound around a reel roller 27.

In the fiber electrode fabrication apparatus having the above structure, a current was applied to the electrolytic bath 17 from the DC power supply 20, with the rotation of the reel roller 27 stopped. Electrodeposition with a current density of 50 mA/cm² was performed for 10 minutes with a bath temperature in the electrolytic bath 17 kept at 25 °C. A fiber of the PAN-based carbon fiber tow 12, on which the electrodeposition had been performed, was observed with an optical microscope. It was confirmed that a nickel hydroxide coating having a thickness of approximately 6 to 10 µm was formed on the surface of the fiber of the tow 12.

Next, electrodeposition with a current density of 50 mA/cm² was performed for 10 minutes with a bath temperature in the electrolytic bath 17 kept at 25 °C while the reel roller 27 was rotated at a speed of 10 cm/min to wind the PAN-based carbon fiber tow 12. A fiber of the PAN-based carbon fiber tow 12, on which the electrodeposition had been performed, was observed with an optical microscope. It was confirmed that a nickel hydroxide coating having a thickness of approximately 3 to 5 µm was formed on the surface of the fiber of the tow 12. It is considered the reason for such a thin nickel hydroxide coating to have been uniformly formed on the surface is that owing to the rotation of the reel roller 27, the nickel nitrate aqueous solution in the electrolytic bath 17 was suitably agitated near the PAN-based carbon fiber tow 12, and thereby the concentration of an alkali produced near the PAN-based carbon fiber tow 12 through cathodic polarization was reduced.

### (3) Example 2 of Fiber Electrode Fabrication Method

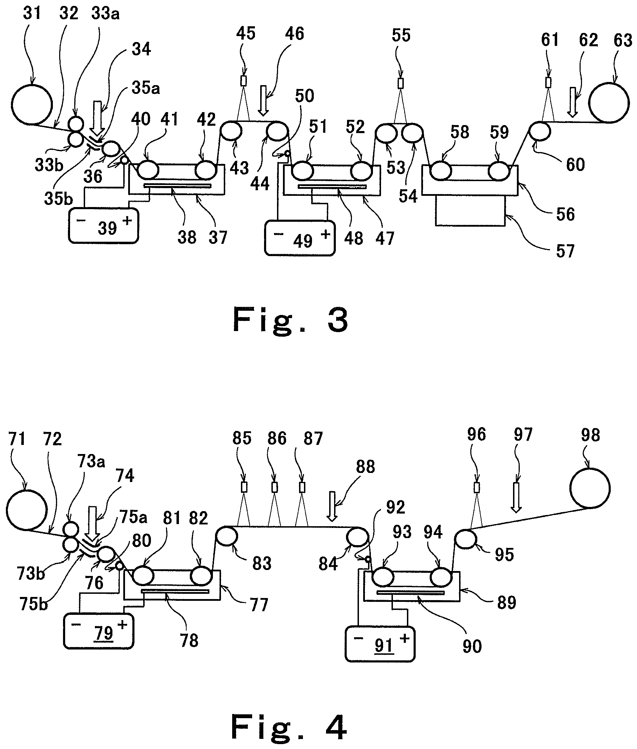

Fig. 3 is a schematic structural diagram showing another example of the fiber electrode fabrication apparatus. A fibrous nickel hydroxide positive electrode for use in an alkaline secondary battery was fabricated by using the fiber electrode fabrication apparatus as shown in Fig. 3. In Fig. 3, the reference sign 31 denotes a winding roller around which a carbon fiber tow 32 formed of 12000 PAN-based carbon fibers is wound in a rolled-up manner. The PAN-based carbon fiber tow 32 is unwound from the winding roller 31 and passes through a pair of upper and lower guide rollers 33a and 33b. Then, compressed air 34 compressed by a compressor (not shown) is blown against the carbon fiber tow 32. As a result, the carbon fiber tow is spread, so that the width thereof is increased from 1 cm, which is the original width, to 5 cm. The reference signs 35a and 35b denote air diffuser plates for diffusing the compressed air in the width direction of the carbon fiber tow. The air diffuser plates 35a and 35b have the same function as the air diffuser plates 15a and 15b.

The PAN-based carbon fiber tow 32, after being spread, reaches a plating bath 37 through a roller 36. The plating bath 37 is a Watts bath which contains a nickel sulfate hexahydrate at a concentration of 300 g/liter, a nickel chloride hexahydrate at a concentration of 45 g/liter, and boric acid at a concentration of 35 g/liter. The temperature of the Watts bath is 40 °C, and the pH is 4.5. A nickel plate 38 having a thickness of 2 mm is placed at the bottom of the plating bath 37. The nickel plate 38 is connected to a positive electrode terminal of a DC power supply 39. A negative electrode terminal of the DC power supply 39 is in contact with the PAN-based carbon fiber tow 32 via a roller 40. The PAN-based carbon fiber tow 32 in the plating bath 37 is moved out of the bath through rollers 41 and 42. At a position between rollers 43 and 44, a spray 45 sprays mist water on the PAN-based carbon fiber tow 32. The PAN-based carbon fiber tow 32 is washed with the water sprayed thereon, and then dried by air 46 blown from a fan (not shown). Thereafter, the PAN-based carbon fiber tow 32 reaches an electrolytic bath 47. The sprayed water is preferably ion-exchanged water.

The electrolytic bath 47 is filled with a nickel nitrate aqueous solution, in which the nickel nitrate concentration is 1 mol/liter. A nickel plate 48 having a thickness of 2 mm is placed at the bottom of the electrolytic bath 47. The nickel plate 48 is connected to a positive electrode terminal of a DC power supply 49. A negative electrode terminal of the DC power supply 49 is in contact with the PAN-based carbon fiber tow 32 via a roller 50. The PAN-based carbon fiber tow 32 in the electrolytic bath 47 is moved out of the bath through rollers 51 and 52. At a position between rollers 53 and 54, a spray 55 sprays mist water on the fiber tow 32. The PAN-based carbon fiber tow 32 is washed with the water sprayed thereon. Thereafter, the PAN-based carbon fiber tow 32 reaches an alkali tank 56. The alkali tank 56 is provided with a heating device 57 which is an electric heater. The alkali tank 56 is filled with a potassium hydroxide aqueous solution, in which the concentration of the potassium hydroxide is 6 mol/liter. The temperature of the tank is 70 °C.

The PAN-based carbon fiber tow 32 in the alkali tank 56 is moved out of the tank through rollers 58 and 59. The fiber tow 32 further passes through a roller 60. Thereafter, a spray 61 sprays mist water on the fiber tow 32. The PAN-based carbon fiber tow 32 is washed with the water sprayed thereon, and then dried by air 62 blown from a fan (not shown). Thereafter, the PAN-based carbon fiber tow 32 is wound around a reel roller 63.

In the fiber electrode fabrication apparatus having the above structure, the DC power supplies 39 and 49 were energized while the reel roller 63 was rotated at a speed of 10 cm/min to wind the PAN-based carbon fiber tow 32 and the PAN-based carbon fiber tow 32 was unwound from the winding roller 31. The compressed air 34 was blown against the PAN-based carbon fiber tow 32. As a result, the carbon fiber tow 32 was spread, so that the width thereof was increased from 1 cm, which is the original width, to 5 cm. Thereafter, the PAN-based carbon fiber tow 32 was nickel-plated in the plating bath 37. Then, the spray 45 sprayed mist steam on the PAN-based carbon fiber tow 32. The PAN-based carbon fiber tow 32 was washed with the water sprayed thereon, and then dried by the air 46 blown from the fan (not shown). Thereafter, the PAN-based carbon fiber tow 32 reached the electrolytic bath 47. The PAN-based carbon fiber tow 32 being exposed to the sprayed mist water prevents damage to the PAN-based carbon fiber tow 32.

Since the PAN-based carbon fiber tow 32, which has been dried, is fed into the electrolytic bath 47, a change in the solution concentration in the electrolytic bath 47 is prevented. Electrodeposition with a current density of 50mA/cm² is performed for 10 minutes with a bath temperature in the electrolytic bath 47 kept at 25 °C. Thereafter, the PAN-based carbon fiber tow 32 is immersed in an alkali in the alkali tank 56. In this manner, nitrate acid remaining on the PAN-based carbon fiber tow 32 after the nickel hydroxide electrodeposition process in the electrolytic bath 47 can be neutralized. This makes it possible to obtain a nickel hydroxide coating with increased crystallinity. By heating the alkali in the alkali tank 56 by using the heating device 57 provided at the alkali tank 56, the alkali immersing process can be performed within a short period of time.

The PAN-based carbon fiber tow 32 in a sheet-like shape was wound around the reel roller 63, and then a fiber of the tow 32 was observed with an optical microscope. It was confirmed that a nickel hydroxide coating having a thickness of approximately 3 to 5 µm was formed on the fiber of the PAN-based carbon fiber tow 32.

### (4) Example 3 of Fiber Electrode Fabrication Method

Fig. 4 is a schematic structural diagram showing yet another example of the fiber electrode fabrication apparatus. A fibrous positive electrode for use in a lithium ion secondary battery was fabricated by using the fiber electrode fabrication apparatus as shown in Fig. 4. In Fig. 4, the reference sign 71 denotes a winding roller around which a carbon fiber tow 72 formed of 12000 PAN-based carbon fibers is wound in a rolled-up manner. The PAN-based carbon fiber tow 72 is unwound from the winding roller 71 and passes through a pair of upper and lower guide rollers 73a and 73b. Then, compressed air 74 compressed by a compressor (not shown) is blown against the carbon fiber tow 72. As a result, the carbon fiber tow is spread, so that the width thereof is increased from 1 cm, which is the original width, to 5 cm. The reference signs 75a and 75b denote air diffuser plates for diffusing the compressed air in the width direction of the carbon fiber. The air diffuser plates 75a and 75b have the same function as the air diffuser plates 15a and 15b.

The PAN-based carbon fiber tow 72, after being spread, reaches a plating bath 77 through a roller 76. The plating bath 77 is a bath, which is a liquid containing AlCl₃-1-ethyl-3-methylimidazolium chloride (AlCl₃-EMIC) room temperature molten salt and in which AlCl₃ and EMIC are mixed in a molar ratio of 2:1 (here, no particular solvent is added since a liquid molten salt is obtained by mixing a powder of AlCl₃ with EMIC). A nickel plate 78 having a thickness of 2 mm is placed at the bottom of the plating bath 77. The nickel plate 78 is connected to a positive electrode terminal of a DC power supply 79. A negative electrode terminal of the DC power supply 79 is in contact with the PAN-based carbon fiber tow 72 via a roller 80. The PAN-based carbon fiber tow 72 in the plating bath 77 is moved out of the bath through rollers 81 and 82. At positions between rollers 83 and 84, a spray 85 sprays acetone, a spray 86 sprays ethanol, and a spray 87 sprays ion-exchanged water on the PAN-based carbon fiber tow 72. The PAN-based carbon fiber tow 72 is dried by air 88 blown from a fan (not shown). Thereafter, the PAN-based carbon fiber tow 72 reaches an electrolytic bath 89.

The electrolytic bath 89 is filled with a manganese nitrate aqueous solution, in which the manganese nitrate concentration is 1 mol/liter. A nickel plate 90 having a thickness of 2 mm is placed at the bottom of the electrolytic bath 89. The nickel plate 90 is connected to a positive electrode terminal of a DC power supply 91. A negative electrode terminal of the DC power supply 91 is in contact with the PAN-based carbon fiber tow 72 via a roller 92. The PAN-based carbon fiber tow 72 in the electrolytic bath 89 is moved out of the bath through rollers 93 and 94. The PAN-based carbon fiber tow 72 further passes through a roller 95. Thereafter, a spray 96 sprays mist water on the fiber tow 72. The PAN-based carbon fiber tow 72 is washed with the water sprayed thereon, and then dried by air 97 blown from a fan (not shown). Thereafter, the PAN-based carbon fiber tow 72 is wound around a reel roller 98.

In the fiber electrode fabrication apparatus having the above structure, the DC power supplies 79 and 91 were energized while the reel roller 98 was rotated at a speed of 10 cm/min to wind the PAN-based carbon fiber tow 72 and the PAN-based carbon fiber tow 72 was unwound from the winding roller 71. The compressed air 74 was blown against the PAN-based carbon fiber tow 72. As a result, the carbon fiber tow 72 was spread, so that the width thereof was increased from 1 cm, which is the original width, to 5 cm. Thereafter, the PAN-based carbon fiber tow 72 was aluminum-plated in the plating bath 77. A fiber of the PAN-based carbon fiber tow 72 was observed with a scanning electron microscope (SEM) after the tow 72 was moved out of the plating bath 77. It was confirmed that a metal aluminum coating having a thickness of approximately 1 µm was formed on the fiber of the tow 72.

Then, the molten salt adhered to the PAN-based carbon fiber tow 72 was washed away by spraying, on the fiber tow 72, acetone from the spray 85, ethanol from the spray 86, and ion-exchanged water from the spray 87. The PAN-based carbon fiber tow 72 reached the electrolytic bath 89 after being dried by the air 88 blown from the fan (not shown).

Electrodeposition with a current density of 50 mA/cm² was performed with a bath temperature in the electrolytic bath 89 kept at 25 °C while the PAN-based carbon fiber tow 72 was wound at a speed of 10 cm/min. Thereafter, the PAN-based carbon fiber tow 72 was wound around the reel roller 98. A fiber of the PAN-based carbon fiber tow 72 was observed with SEM after the tow 72 was moved out of the electrolytic bath 89. It was confirmed that a Mn₃O₄ coating having a thickness of approximately 5 µm was formed on the metal aluminum coating of the carbon fiber.

The carbon fiber tow in a sheet-like shape wound around the reel roller 98 was removed from the reel roller 98 and immersed in a lithium hydroxide aqueous solution, to which three oxidation equivalents of sodium hypochlorite were added per equivalent of Mn₃O₄ formed on the sheet-like carbon fiber (sodium hypochlorite: 0.08 mol/liter). Then, hydrothermal treatment was performed under the condition of 110 °C for 20 hours. Thereafter, the sheet-like carbon fiber was washed with water and dried under a reduced pressure at 110 °C for 24 hours or longer. In this manner, a fiber positive electrode (having a LiMn₂O₄ coating) for use in a lithium ion secondary battery was obtained.

### (5) Example 4 of Fiber Electrode Fabrication Method

A stacked body of a fiber negative electrode for use in a lithium ion secondary battery and a separator was obtained by using the fiber electrode fabrication apparatus shown in Fig. 2.

In Example 4, the electrolytic bath 17 is filled with an aqueous solution for Li₃PO₄ plating, which is obtained by dissolving lithium nitrate (LiNO₃) and sodium phosphate (NaH₂PO₄) at rates of 0.1 mol/L and 0.02 mol/L, respectively, in ion-exchanged water.

The DC power supply 20 was energized, and electrodeposition was performed for 10 minutes while the reel roller 27 was rotated at a speed of 5 cm/min to wind the PAN-based carbon fiber tow 12. The temperature of the bath in the electrolytic bath 17 was kept at 25 °C and an inter-electrode voltage was maintained at 7V. A fiber of the PAN-based carbon fiber tow 12, on which the electrodeposition had been performed, was observed with an optical microscope. It was confirmed that a Li₃PO₄ coating having a thickness of approximately 10 µm was formed on the carbon fiber.

Since carbon is usable as a negative electrode for use in a lithium ion battery, the carbon fiber can be directly used as a fiber negative electrode. Since Li₃PO₄ has an insulating property and lithium ion permeability, a Li₃PO₄ coating on a carbon fiber can act as both a separator and an electrolyte.

### (6) Example 1 of Method of Fabricating Stacked Body of Fiber Positive Electrode and Separator

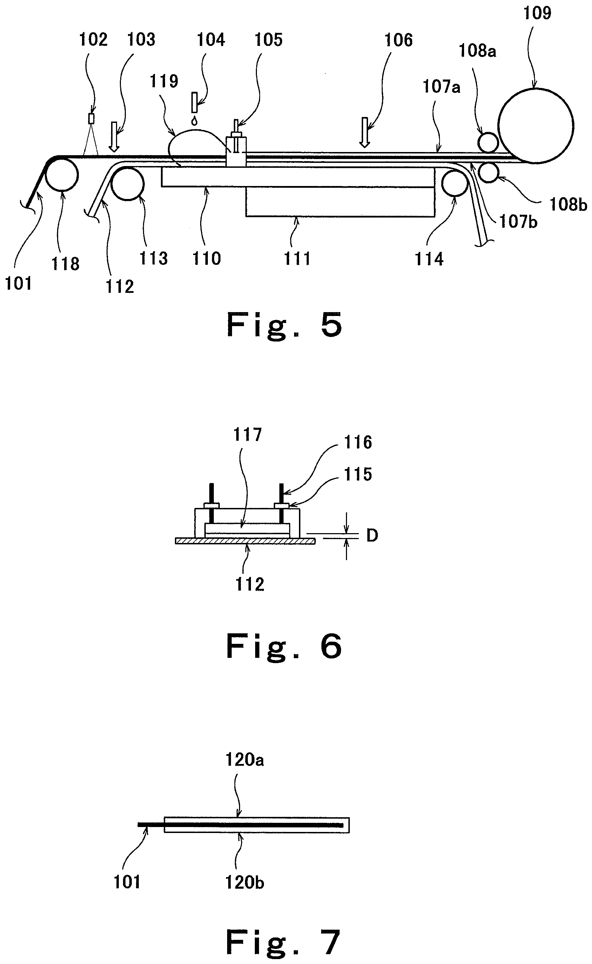

By using an apparatus shown in Fig. 5, a separator coating was formed on a fibrous nickel hydroxide positive electrode for use in an alkaline secondary battery, the positive electrode having been obtained in Example 2 of the fiber electrode fabrication method. In Fig. 5, the reference sign 101 denotes a sheet-like carbon fiber on which a nickel hydroxide coating is formed; the reference sign 102 denotes a spray configured to spray mist steam; the reference sign 103 denotes air blown from a fan (not shown); the reference sign 104 denotes a dripping device configured to drip slurry; the reference sign 105 denotes a scraper configured to scrape away the slurry that remains excessively on the carbon fiber; the reference sign 106 denotes warm air; the reference signs 108a and 108b denote pressing rollers configured to press slurry coatings 107a and 107b which have been applied to the upper and lower faces of the sheet-like carbon fiber 101; the reference sign 109 denotes a reel roller configured to wind the sheet-like carbon fiber on which separator coatings have been formed; the reference sign 110 denotes a glass substrate; the reference sign 111 denotes a heating device which is an electric heater provided at the glass substrate 110; and the reference sign 112 denotes a polyester sheet which is release-treated on its external side (i.e., the side facing the sheet-like carbon fiber 101). The polyester sheet 112 is an endless sheet which circulates through rollers 113 and 114 and also through a plurality of rollers which are not shown.

Fig. 6 is a front view of a scraper which is included in the separator coating formation apparatus shown in Fig. 5. As shown in Fig. 6, the scraper 105 allows adjustment of a distance D between a scraping plate 117 and the polyester sheet 112 through adjustment of the vertical position of a bolt 116 screwed in a nut 115. To be specific, the slurry dripped from the dripping device 104 falls on the polyester sheet 112, and the thickness of the slurry to be applied to the upper and lower faces of the sheet-like carbon fiber 101 can be adjusted by adjusting the distance D.

In Example 1 of the method of fabricating a stacked body of a fiber positive electrode and a separator, polymer slurry for forming a separator coating is dripped from the slurry dripping device 104 onto the nickel hydroxide-coated sheet-like carbon fiber 101 which moves horizontally, and thereby a separator coating is formed on a fibrous nickel hydroxide positive electrode for use in an alkaline secondary battery. However, as an alternative, a wetted-wall method or a spray method may be used. Further alternatively, the polymer slurry for forming a separator coating can be applied to the nickel hydroxide-coated sheet-like carbon fiber 101 while the carbon fiber 101 is moving diagonally or vertically. A dripping method, a wetted-wall method, or a spray method may be used also in the case where the nickel hydroxide-coated sheet-like carbon fiber 101 moves diagonally or vertically. Furthermore, whether or not to use the scraper 105 is arbitrary. By suitably selecting slurry application conditions, a separator coating can be formed even without the use of the scraper 105.

In the apparatus having the above structure, mist steam is sprayed from the spray 102. The nickel hydroxide-coated sheet-like carbon fiber 101, which has a thickness of approximately 50 µm, is fed through a roller 118 and washed with the sprayed mist steam. Thereafter, the air 103 is blown against the carbon fiber 101, and thereby the carbon fiber 101 is dried. Then, the dripping device 104 drips slurry containing 10 wt % of polyvinyl alcohol (PVA), which is a polymer having ion permeability, onto the sheet-like carbon fiber 101. The PVA slurry forms a liquid pool 119 near the entrance side of the scraper 105. This increases a possibility that the liquid pool 119 forms a uniform slurry film on the sheet-like carbon fiber 101 after the fiber passed through the scraper. In this example, the distance D (see Fig. 6) is adjusted to 80 µm and the gap between the carbon fiber 101 and the polyester sheet 112 is adjusted to 15 µm. Accordingly, a PVA slurry film having a thickness of 15 µm is formed on each of the upper and lower faces of the sheet-like carbon fiber 101 having a thickness of 50 µm when the carbon fiber 101 has passed through the scraper 105. If there is a risk that the drying process may cause a crack in the active material, or cause dropping of the active material, then the drying process of blowing the air 103 against the carbon fiber 101 may be eliminated.

Since the glass substrate 110 is heated by the heating device 111, the temperature at a contact point between the polyester sheet 112 and the PVA slurry film is approximately 60 °C. Further, since the warm air 106 of approximately 45 °C is blown against the PVA slurry film, the PVA slurry film is dried during a period of a few minutes to approximately ten minutes before the PVA slurry film reaches the reel roller 109 after exiting from the scraper 105. In addition, the pressing rollers 108a and 108b effectively press the PVA slurry film. As a result, as shown in Fig. 7, PVA coatings 120a and 120b are formed on the upper and lower faces of the nickel hydroxide-coated sheet-like carbon fiber 101. In this example, the thickness of each of the PVA coatings 120a and 120b was 7 to 10 µm. The electrical resistance of the PVA coatings was measured by using a tester. It was confirmed from the measurement that an electrical resistance of 100 MΩ or more was indicated for the overall length of the carbon fiber, and that the PVA coatings had a sufficient insulating property. Since the polyester sheet 112 is release-treated, the sheet-like carbon fiber 101 having the PVA coatings formed thereon was wound by the reel roller 109 with no difficulty.

After a fiber positive electrode according to any one of Examples 1 to 3 is fabricated, a separator may be formed thereon by using the apparatus shown in Fig. 5. Apparatus arrangement may be such that the apparatus shown in Fig. 2 and the apparatus shown in Fig. 5 are arranged continuously, or the apparatus shown in Fig. 3 and the apparatus shown in Fig. 5 are arranged continuously, or the apparatus shown in Fig. 4 and the apparatus shown in Fig. 5 are arranged continuously. Particularly in a case where a material that is easily damaged and weak to bending is used as an active material, there is a possibility that when a carbon fiber is wound after being coated with the active material, the active material coating may drop from the carbon fiber. However, if the apparatus shown in Fig. 2 and the apparatus shown in Fig. 5 are arranged continuously, or the apparatus shown in Fig. 3 and the apparatus shown in Fig. 5 are arranged continuously, or the apparatus shown in Fig. 4 and the apparatus shown in Fig. 5 are arranged continuously, then a separator coating is formed outside an active material that is obtained after the washing and drying processes. Here, the separator coating is expected to serve to prevent the dropping of the active material.

### (7) Example 2 of Fiber Negative Electrode Fabrication Method

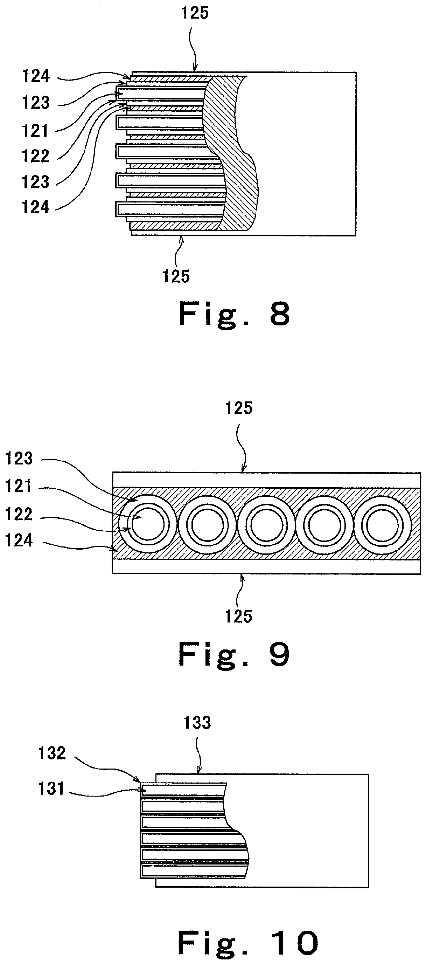

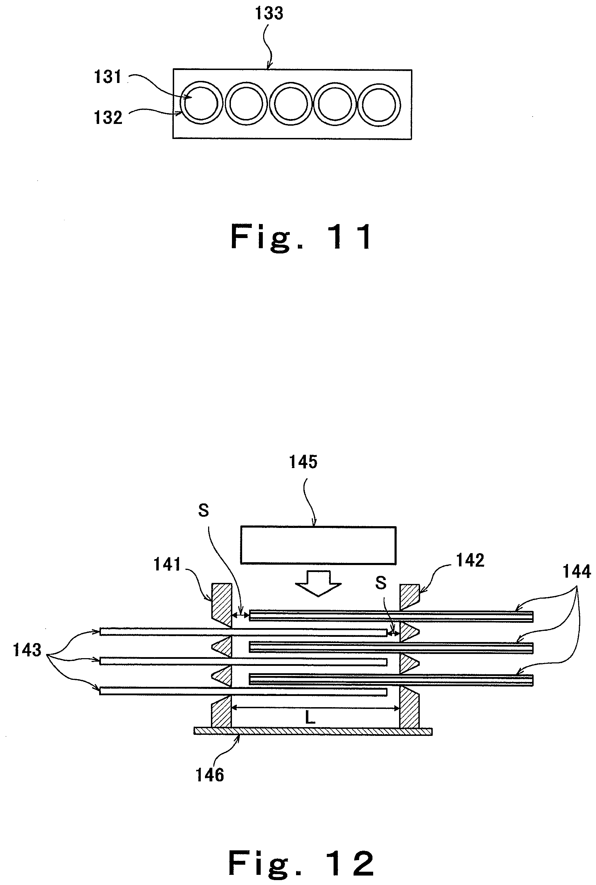

In the apparatus of Fig. 2, the electrolytic bath 17 was used as a plating bath. The plating bath 17 was a Watts bath, the composition of which was the same as in Example 2 described above. The carbon fiber tow 12 was, after being spread, plated with nickel in the plating bath 17. Next, by using the apparatus shown in Fig. 5, slurry for a negative electrode dripped from the dripping device 104 was applied to the nickel-plated carbon fiber tow. The slurry for a negative electrode was obtained in the manner described below. A powder of a hydrogen storage alloy was mixed with an aqueous solution of 1.5 wt % carboxymethylcellulose (CMC) and a dispersion of 50 wt % styrene-butadiene rubber (SBR). Further, ion-exchanged water was added to the mixture little by little until the mixture ratio by weight became such that hydrogen storage alloy: CMC (solid content): SBR (solid content): water = 100:0.2:2:17. The resulting slurry was used as the slurry for a negative electrode. With the above method, a negative electrode active material coating of the hydrogen storage alloy was formed on the nickel-plated carbon fiber. As a result, a sheet-like fiber negative electrode was obtained. Fig. 10 is a partially cutaway plan view of the sheet-like fiber negative electrode, and Fig. 11 is a cross-sectional view of Fig. 10. In both Fig. 10 and Fig. 11, the reference sign 131 denotes the carbon fiber; the reference sign 132 denotes the nickel plating coating on the carbon fiber; and the reference sign 133 denotes a negative electrode active material coating of the hydrogen storage alloy.

### (8) Example of Method of Fabricating Stacked Body of Fiber Positive Electrode, Separator, and Fiber Negative Electrode

A negative electrode active material coating of a hydrogen storage alloy was formed on the stacked body of the fiber positive electrode and the separator, the stacked body having been obtained in the example described above in (6). A hydrogen storage alloy contains one or more rare earth elements such as La and a plurality of elements such as Ni, Al, Mn, or Co. For this reason, it is very difficult to form plating, with a suitable composition ratio, on a hydrogen storage alloy that is to be used as an alloy for a battery. Therefore, a stacked body of a fiber positive electrode, a separator, and a fiber negative electrode was fabricated by a method that is the same as the example method described above in (6), except that a PVA-coated fiber positive electrode sheet was used as a sheet-like fiber positive electrode 101 and slurry dripped from the dripping device 104 was obtained as follows: a powder of a publicly known hydrogen storage alloy (e.g., MmNi_{3.65}Co_{0.75}Mn_{0.4}Al_{0.3} wherein Mm is mischmetal (rare earth mixture)) was mixed with an aqueous solution of 1.5 wt % carboxymethylcellulose and a dispersion of 50 wt % styrene-butadiene rubber (here, the mixture ratio by weight was such that hydrogen storage alloy: CMC (solid content): SBR (solid content): water = 100:0.2:2:17).

In this case, a PVA-coated carbon fiber is used, which has an active material coating formed thereon and which has a thickness of approximately 60 µm. The distance D shown in Fig. 6 was adjusted to 130 µm and the gap between the sheet-like carbon fiber 101 and the polyester sheet 112 was adjusted to 30 µm. Accordingly, when the carbon fiber 101 passed through the scraper 105, a hydrogen storage alloy slurry coating having a thickness of 30 µm was formed on each of the upper and lower faces of the sheet-like carbon fiber 101.

Fig. 8 is a partially cutaway plan view showing a stacked body of a fiber positive electrode, a separator, and a fiber negative electrode in a state of being wound around the reel roller 109. In Fig. 8, the reference sign 121 denotes a carbon fiber; the reference sign 122 denotes a nickel-plating coating on the carbon fiber 121; the reference sign 123 denotes a positive electrode nickel hydroxide active material coating on the nickel plating coating 122; the reference sign 124 denotes a PVA separator coating on the positive electrode nickel hydroxide active material coating 123; and the reference sign 125 denotes a negative electrode hydrogen storage alloy active material coating. Fig. 9 is a cross-sectional view of Fig. 8. The positive electrode active material coating 123, which is a tubular nickel hydroxide coating, is formed on the carbon fiber 121, with the nickel plating coating 122 formed between the carbon fiber 121 and the positive electrode active material coating 123. The positive electrode active material coating 123 is coated with the separator coating 124 which is a PVA coating having a thickness of approximately 15 to 20 µm. Since the thickness of the separator is approximately 1/10 of the separator thickness of a conventional battery, great improvement in charge/discharge capability can be expected.

### (9) Pressurizing Cutter Configured to Cut Fiber Positive Electrode and Fiber Negative Electrode, At Least One of Which Has Separator Coating Formed Thereon

Fig. 12 is a schematic structural diagram showing a pressurizing cutter configured to cut fiber positive electrodes and fiber negative electrodes while stacking and press-forming the fiber positive electrodes and the fiber negative electrodes, either or both of which have a separator coating formed thereon. In Fig. 12, a left side die 141 and a right side die 142 are each provided with slits that are vertically spaced apart from each other and formed at regular intervals. These slits are formed such that the slits of the left side die 141 and the slits of the right side die 142 are vertically uneven. In this example, fiber negative electrodes 143 obtained in the above-described example in (7) are inserted in the slits of the left side die 141, and fiber positive electrode/separator stacked bodies 144 obtained in the above-described example in (6) are inserted in the slits of the right side die 142. Here, a gap S is formed between the inner wall of the left side die 141 and end portions of the stacked bodies 144, and between the inner wall of the right side die 142 and end portions of the fiber electrodes 143, such that the insertion length of each fiber electrode or stacked body is shorter than a distance L between the inner wall of the left side die 141 and the inner wall of the right side die 142. As a result, positions of end portions of the fiber positive electrode/separator stacked bodies and positions of end portions of the fiber negative electrodes do not coincide with each other in the vertical direction. This makes it easy to form terminals in a step performed afterward.

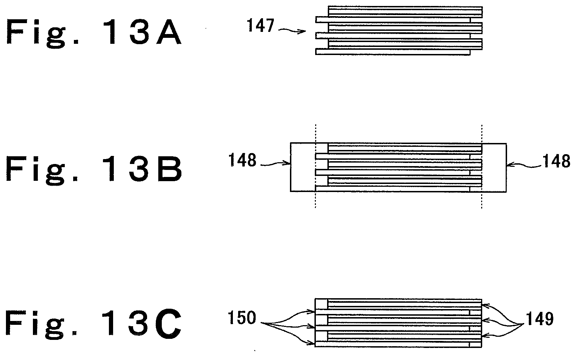

A cutter 145 is lowered to cut away the fiber electrodes and the stacked bodies and to press a stack of the fiber electrodes and the stacked bodies against a fixed base 146. As a result, a fiber electrode stack 147 as shown in Fig. 13A is obtained. Fig. 13A shows the fiber electrode stack 147 which is formed as a result of stacking three sheet-like fiber positive electrode/separator stacked bodies and three sheet-like fiber negative electrodes. However, the number of sheet-like fiber positive electrodes and sheet-like fiber negative electrodes to be stacked may be varied as necessary.

Next, as shown in Fig. 13B, epoxy resin adhesive 148 was applied to a positive electrode terminal side and a negative electrode terminal side of the fiber electrode stack 147. After the adhesive was dried, the adhesive was ground by using a grinder as indicated by dotted lines. As a result, as shown in Fig. 13C, positive electrode exposed portions 149 and negative electrode exposed portions 150 were exposed from the resin. A positive electrode terminal and a negative electrode terminal can be formed by bringing, for example, nickel metal plates into contact with the positive electrode exposed portions 149 and the negative electrode exposed portions 150.

### (10) Arrangement of Fiber Positive Electrodes and Fiber Negative Electrodes

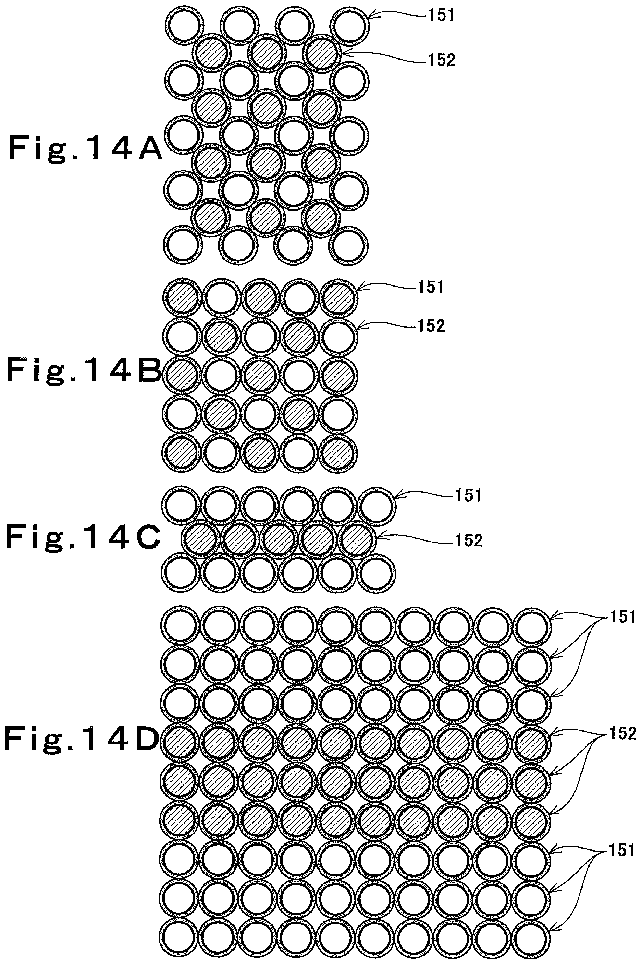

Figs. 14A to 14D are schematic diagrams each showing specific arrangement of fiber positive electrodes and fiber negative electrodes in a fiber electrode stack which is fabricated by the above-described method in (9). Specifically, sheet-like fiber positive electrodes and sheet-like fiber negative electrodes are vertically and alternately arranged, and then pressed together. As a result, as shown in Fig. 14A and Fig. 14B, each fiber positive electrode 151 having a separator coating formed on its outer periphery comes into contact with fiber negative electrodes 152 at four points on the outside of the fiber positive electrode 151. Similarly, each fiber negative electrode 152 having a separator coating formed on its outer periphery comes into contact with fiber positive electrodes 151 at four points on the outside of the fiber negative electrode 152. Moreover, this arrangement prevents contact between fiber positive electrodes 151 and contact between fiber negative electrodes 152, and therefore, the inter-electrode distance can be made shortest possible in the fiber electrode stack shown in Figs. 14A and 14B, which is ideal. Fig. 14B shows Fig. 14A being rotated to the right or left by 45 degrees. Thus, Fig. 14B is an equivalent diagram to Fig. 14A.

In order to realize the arrangement as shown in Figs. 14A and 14B with conventional art, it is necessary to arrange fiber positive electrodes and fiber negative electrodes one by one alternately. However, in reality, it is almost impossible to perform a task of alternately arranging several thousands to several tens of thousands of fiber electrodes, each of which has a diameter of approximately tens of micrometers. However, according to the present invention, fiber electrodes with ideal electrode arrangement can be obtained through a simple task as follows: a sheet-like fiber positive electrode and a sheet-like fiber negative electrode, each of which is obtained by processing several thousands of fiber electrodes into a sheet-like shape, are vertically and alternately stacked, and then pressed together. Since each fiber negative electrode is squeezed in between fiber positive electrodes, a distance to a counter electrode is minimized. This makes it possible to significantly reduce internal resistance at the time of charging/discharging.

Moreover, by forming a separator coating on each fiber electrode, a separator surface area is greatly increased and the distance to its counter electrode is shortened as compared to conventional fiber batteries. Consequently, even in cases of batteries that use lithium ion as an intercalating species, if the present invention is applied to such a lithium ion battery, since a moving distance of lithium is short, the charging speed and discharging speed of the battery are greatly improved, and also, ultrafast charging within less than one minute, and large current discharging greater than a standard battery capacity by 100 times or more, are realized. In Fig. 14A and Fig. 14B, the fiber positive electrode 151 and the fiber negative electrode 152 both have a round cross section. However, the cross-sectional shape is not limited thereto. The cross-sectional shape of the fiber positive electrode and the fiber negative electrode may be polygonal such as triangular or quadrangular, or may be oval.

Sheet-like fiber positive electrodes and sheet-like fiber negative electrodes may be arranged as shown in Fig. 14C, such that fiber positive electrodes 151 and fiber negative electrodes 152 are closest packed. In this case, each fiber is surrounded by six fiber electrodes including fiber positive electrodes and fiber negative electrodes.

If the sheet-like fiber positive electrode and the sheet-like fiber negative electrode both have a sufficiently thin sheet thickness, then the electrode arrangement may be such that a plurality of sheet-like fiber positive electrodes are stacked together and a plurality of sheet-like fiber negative electrodes are stacked together, as shown in Fig. 14D. Assume a case where a single fiber thickness is 15 µm. In such a case, even if 10 sheets of sheet-like fiber positive electrodes, or 10 sheets of sheet-like fiber negative electrodes, are stacked, the stacked sheets have a thickness of merely approximately 150 µm. Usually, a conventional plate electrode has a thickness of approximately 300 µm. Accordingly, it can be expected that the stacked fiber electrode sheets, having a thickness that is approximately a half of the thickness of a conventional plate electrode, improve the charging speed and discharging speed.

### (11) Fiber Battery Fabrication Example 1

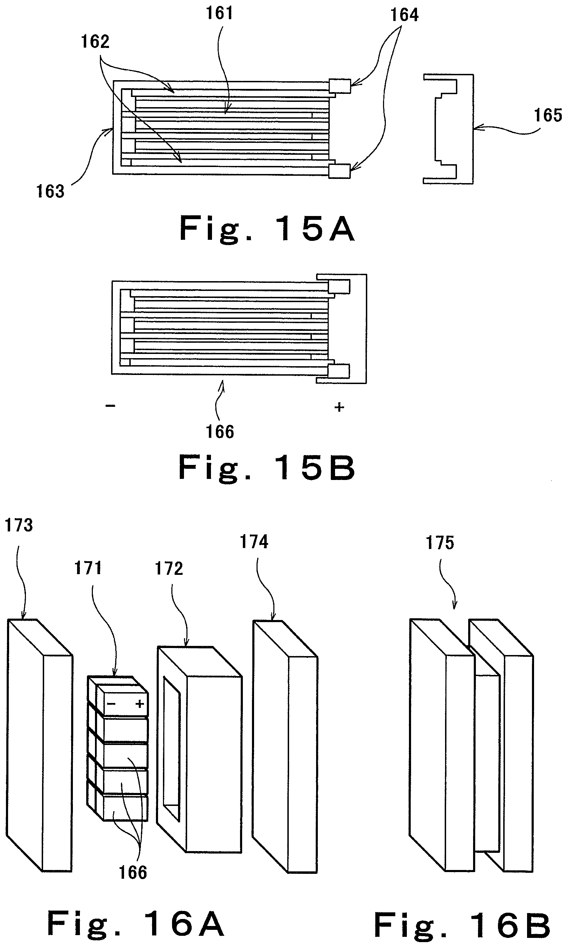

As shown in Fig. 15A, a fiber electrode stack 161, which was fabricated as shown in Fig. 13C, was wrapped around by a polypropylene spacer 162. Next, the fiber electrode stack 161 was placed in a nickel-plated steel battery casing 163 (i.e., a negative electrode terminal) having a square cross section. Polypropylene spacers 164 were attached to an end, of the battery casing 163, that did not cover the stack 161. Then, six grams of an electrolyte solution, which was obtained by adding LiOH at a concentration of 30 g/litter to an aqueous solution of 6 mol/liter KOH, was injected into the fiber electrode stack 161, and then the stack 161 was sealed by a nickel-plated steel cover 165 (i.e., a positive electrode terminal). In this manner, a fiber battery 166 as shown in Fig. 15B was fabricated. The capacity of the fiber battery 166 was confirmed to be 500 mAh.

As an activating process for the fiber battery 166, charging and discharging were performed ten times where charging to 105 % of the capacity with a current of 50 mA was performed and discharging to a cutoff voltage of 0.8V with a current of 50 mA was performed. Then, the same activating process was performed with a current of 100 mA. As a result, a flat discharge voltage of 1.3 V was observed and a discharge capacity of 100 % was obtained. Next, charging to 110 % of the capacity with a current of 500 mA, and discharging with 500 mA, were performed. As a result, almost no current decrease or no voltage decrease was observed as compared to a case where discharging was performed with a current value of 50 mA or 100 mA. Even when the discharge current was increased to 15 A, a discharge voltage was 1.26 V. Thereafter, charging with a current value of 50 A was performed for 40 seconds, and it was confirmed that the discharge amount at 500 mAh indicated 98.5 %.

### (12) Fiber Battery Fabrication Example 2

Fig. 16A shows a case where the fiber battery 166 (500 mA battery) having a square cross section, which was obtained in Fabrication Example 1 in (11), was used as a unit battery and ten unit batteries were stacked in two groups of five unit batteries. In Fig. 16A, the ten unit batteries are defined as a unit battery stack 171. The unit battery stack 171 was accommodated in a polypropylene cell 172, and a positive electrode terminal side and a negative electrode terminal side of the unit battery stack 171 were covered by nickel-plated steel plates 173 and 174. In this manner, a 5Ah battery 175 as shown in Fig. 16B was formed. As an activating process for the high-capacity 5Ah battery 175, activating charging and discharging were performed fifteen times with a current of 500 mA and a current of 1000 mA, respectively. As a result, a flat discharge curve of 1.3 V was observed and a discharge capacity of 100 % was obtained. Next, charging with a current value of 1000 A was performed for 20 seconds, and it was confirmed that the discharge amount indicated 97.5 %.

The capacity of the battery can be increased by increasing the number of fiber batteries 166 that form the unit battery stack 171.

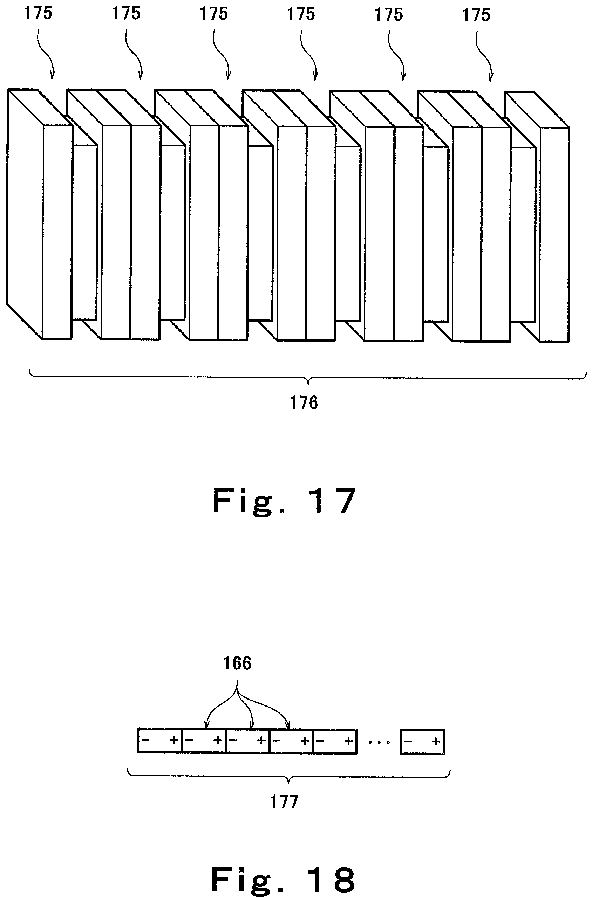

Further, a battery module 176 as shown in Fig. 17 can be formed by stacking a plurality of 5Ah batteries 175. The 5Ah battery 175 shown in Fig. 16B, in which a plurality of fiber batteries 166 are connected in parallel, has a large capacity. However, the voltage of the 5Ah battery 175 is the same as that of one fiber battery 166 which is a unit battery. Increased battery voltage as compared to one fiber battery 166, which is a unit battery, can be obtained by forming the battery module 176 in which a plurality of 5Ah batteries 175 are serially connected.

A battery module 177 as shown in Fig. 18 may be formed by connecting a plurality of fiber batteries 166, which are unit batteries.

If increased battery voltage as compared to the voltage of one fiber battery 166, which is a unit battery, is desired, but having the same battery capacity as that of the unit battery is sufficient, then a battery module in which a plurality of 5Ah batteries 175 are serially connected may be formed.

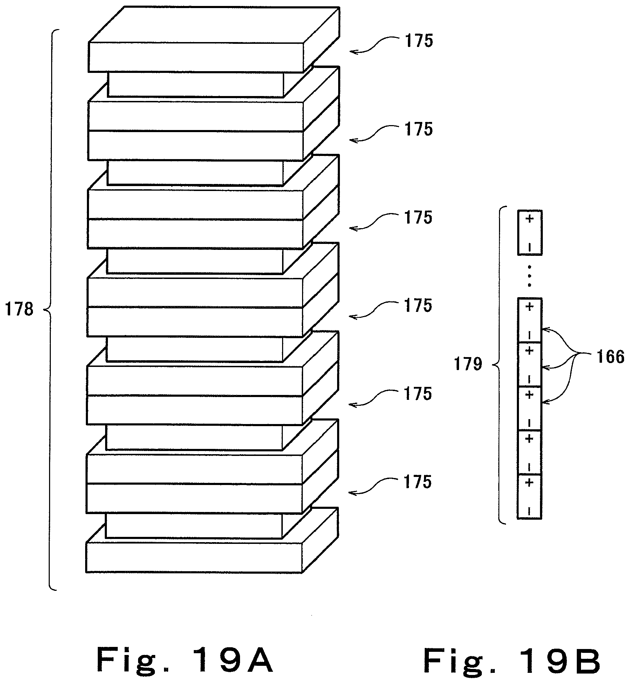

A battery stack 178 as shown in Fig. 19A may be formed by stacking a plurality of 5Ah batteries 175. Similarly, a battery stack 179 as shown in Fig. 19B may be formed by connecting a plurality of fiber batteries 166, which are unit batteries.

In the battery module 176 as shown in Fig. 17, it is preferred that a cooling plate is inserted between adjacent 5Ah batteries 175 to remove heat that is generated due to charging and discharging. The same is true for the battery stack 178 shown in Fig. 19A.

### [Industrial Applicability]

The present invention is applicable to a nickel metal-hydride battery, nickel-cadmium battery, nickel-iron battery, nickel-zinc battery, or a lead battery. The present invention is also applicable to secondary batteries of a nonaqueous electrolyte type, typically a lithium ion battery, and to air batteries and capacitors. Fiber batteries formed by using fiber electrodes have greatly improved high-rate charging/discharging capability, voltage, and cycle-life performance as compared to non-fiber batteries. Therefore, the present invention is applicable not only to small-sized batteries but also to industrial large-sized batteries.

### [Reference Signs List]

- 1:: winding roller
- 1a:: winding roller
- 2:: fiber spreading apparatus
- 2a:: fiber spreading apparatus
- 3:: plating bath
- 4:: electrolytic bath
- 5:: alkali tank
- 6:: separator coating formation apparatus
- 6a:: separator coating formation apparatus
- 7:: pressurizing cutter
- 8:: positive and negative electrode terminal formation apparatus
- 11:: winding roller
- 12:: PAN-based carbon fiber tow
- 13a, 13b:: guide roller
- 14:: compressed air
- 15a, 15b:: air diffuser plate
- 16:: roller
- 17:: electrolytic bath (plating bath)
- 18:: nickel nitrate aqueous solution
- 19:: nickel plate
- 20:: DC power supply
- 21, 22, 23:: roller
- 24a, 24b:: guide roller
- 25:: spray
- 26:: air
- 27:: reel roller
- 31:: winding roller
- 32:: PAN-based carbon fiber tow
- 33a, 33b:: guide roller
- 34:: compressed air
- 35a, 35b:: air diffuser plate
- 36:: roller
- 37:: plating bath
- 38:: nickel plate
- 39:: DC power supply
- 40, 41, 42, 43, 44:: roller
- 45:: spray
- 46:: air
- 47:: electrolytic bath
- 48:: nickel plate
- 49:: DC power supply
- 50, 51, 52, 53, 54:: roller
- 55:: spray
- 56:: alkali tank
- 57:: heating device
- 58, 59, 60:: roller
- 61:: spray
- 62:: air
- 63:: reel roller
- 71:: winding roller
- 72:: PAN-based carbon fiber tow
- 73a, 73b:: guide roller
- 74:: compressed air
- 75a, 75b:: air diffuser plate
- 76:: roller
- 77:: plating bath
- 78:: nickel plate
- 79:: DC power supply
- 80, 81, 82, 83, 84:: roller
- 85, 86, 87:: spray
- 88:: air
- 89:: electrolytic bath
- 90:: nickel plate
- 91:: DC power supply
- 92, 93, 94, 95:: roller
- 96:: spray
- 97:: air
- 98:: winding roller
- 101:: nickel hydroxide-coated sheet-like carbon fiber
- 102:: spray
- 103:: air
- 104:: slurry dripping device
- 105:: scraper
- 106:: warm air
- 107a, 107b:: slurry coating
- 108a, 108b:: pressing roller
- 109:: reel roller
- 110:: glass substrate
- 111:: heating device
- 112:: polyester sheet
- 113, 114:: roller
- 115:: nut
- 116:: bolt
- 117:: scraping plate
- 118:: roller
- 119:: liquid pool
- 120a, 120b:: PVA coating
- 121:: carbon fiber
- 122:: nickel plating coating
- 123:: positive electrode active material coating
- 124:: separator coating
- 125:: negative electrode active material coating
- 131:: carbon fiber
- 132:: nickel plating coating
- 133:: negative electrode active material coating
- 141:: left side die
- 142:: right side die
- 143:: fiber negative electrode
- 144:: fiber positive electrode/separator stacked body
- 145:: cutter
- 146:: fixed base
- 147:: fiber electrode stack
- 148:: adhesive
- 149:: positive electrode exposed portion
- 150:: negative electrode exposed portion
- 151:: fiber positive electrode
- 152:: fiber negative electrode
- 161:: fiber electrode stack
- 162:: spacer
- 163:: battery casing
- 164:: spacer
- 165:: cover
- 166:: fiber battery (unit battery)
- 171:: unit battery stack
- 172:: cell
- 173, 174:: nickel-plated steel
- 175: 5Ah: battery (high-capacity battery)
- 176, 177:: battery module
- 178, 179:: battery stack

## Claims

1. A fiber battery fabrication method comprising the steps of:
(a) obtaining a fiber positive electrode by forming a positive electrode active material coating on a single fiber having a diameter of 0.1 to 100 µm, and obtaining a fiber negative electrode by forming a negative electrode active material coating on a single fiber having a diameter of 0.1 to 100 µm;
(b) forming a separator coating on the fiber positive electrode and/or the fiber negative electrode;
(c) alternately and vertically stacking the fiber positive electrodes and the fiber negative electrodes, either or both of which are coated with the separator coating;
(d) vertically press-forming and cutting a stack of the fiber positive electrodes and the fiber negative electrodes, with horizontal end positions of the fiber positive electrodes and horizontal end positions of the fiber negative electrodes being displaced from each other, to obtain an electrode stack so that the fiber positive electrodes protrude from one end of the electrode stack and the fiber negative electrodes protrude from the other end of the electrode stack;
(e) forming a positive electrode terminal on the protruding fiber positive electrodes; and
(f) forming a negative electrode terminal on the protruding fiber negative electrodes.

2. The fiber battery fabrication method according to claim 1, comprising:
(c1) fixing the fiber positive electrodes and the fiber negative electrodes, which are alternately and vertically stacked, by means of an adhesive after step (c).

3. The fiber battery fabrication method according to claim 1, comprising:
(a0) spreading a fiber tow into single fibers to obtain the single fiber of the fiber positive electrode and/or the single fiber of the fiber negative electrode, prior to step (a).

4. The fiber battery fabrication method according to claim 1, wherein, in step (b), each single fiber on which the respective active material coating is formed is immersed in an alkaline aqueous solution.

5. The fiber battery fabrication method according to claim 1, wherein, in step (b), polymer slurry for use in forming the separator coating is applied to horizontally, diagonally, or vertically moving single fibers on each of which the positive electrode active material coating is formed, and/or to horizontally, diagonally, or vertically moving single fibers on each of which the negative electrode active material coating is formed.

6. The fiber battery fabrication method according to claim 5, wherein, in step (b), the slurry is applied in a dripping method, a wetted-wall method, or a spray method.

7. The fiber battery fabrication method according to claim 3, comprising:
forming a metal coating on each single fiber obtained in the step (a0), between step (a0) and step (a).

8. The fiber battery fabrication method according to claim 7, wherein the metal coating is a nickel plating coating, an aluminum plating coating, or a copper plating coating.

9. A fiber battery fabrication apparatus comprising:
winding rollers around which fiber tows are wound, respectively;
fiber spreading apparatuses configured to spread the fiber tows, respectively;
an active material coating formation apparatus configured to obtain fiber positive electrodes and fiber negative electrodes by forming a positive electrode active material coating or a negative electrode active material coating on each of single fibers that are obtained by spreading the fiber tows, the single fibers each having a diameter of 0.1 to 100 µm;
a separator coating formation apparatus configured to form a separator coating on the fiber positive electrodes and/or the fiber negative electrodes;
a pressurizing cutter configured to cut the fiber positive electrodes and the fiber negative electrodes while vertically stacking and press-forming the fiber positive electrodes and the fiber negative electrodes, either or both of which have the separator coating formed thereon, with horizontal end portions of the fiber positive electrodes and horizontal end positions of the fiber negative electrodes being displaced from each other, to obtain an electrode stack;
a positive electrode terminal formation apparatus configured to cause the fiber positive electrodes to protrude from one end of the electrode stack, and form a positive electrode terminal on the protruding fiber positive electrodes; and
a negative electrode terminal formation apparatus configured to cause the fiber negative electrodes to protrude from the other end of the electrode stack, and form a negative electrode terminal on the protruding fiber negative electrodes.

10. The fiber battery fabrication apparatus according to claim 9, wherein the separator coating formation apparatus includes:
an application apparatus configured to apply polymer slurry for use in forming the separator coating; and
a resin sheet for conveying the fiber positive electrodes or the fiber negative electrodes along the application apparatus.

11. The fiber battery fabrication apparatus according to claim 10, comprising a scraper disposed downstream from the application apparatus.

12. The fiber battery fabrication apparatus according to claim 10, wherein the resin sheet is release-treated.

## Patentansprüche

1. Verfahren zur Herstellung einer Faserbatterie umfassend die Schritte:
(a) erhalten einer Faserpositivelektrode mittels ausbilden einer Positivelektrodenaktivmaterialbeschichtung auf einer einzigen Faser, die einen Durchmesser von 0.1 bis 100 µm hat, und erhalten einer Fasernegativelektrode mittels ausbilden einer Negativelektrodenaktivmaterialbeschichtung auf einer einzigen Faser, die einen Durchmesser von 0.1 bis 100 µm hat;
(b) ausbilden einer Abscheiderbeschichtung auf der Faserpositivelektrode und/oder der Fasernegativelektrode;
(c) abwechselndes und vertikales stapeln der Faserpositivelektroden und der Fasernegativelektroden, wobei entweder eine oder beide von diesen mit der Abscheiderbeschichtung beschichtet sind;
(d) vertikales pressformen und schneiden eines Stapels von Faserpositivelektroden und Fasernegativelektroden, wobei horizontale Endpositionen der Faserpositivelektroden und horizontale Endpositionen der Fasernegativelektroden gegeneinander versetzt werden, um einen Elektrodenstapel zu erhalten, so dass die Faserpositivelektroden aus dem einen Ende des Elektrodenstapels hervorragen und die Fasernegativelektroden aus dem anderen Ende des Elektrodenstapels hervorragen;
(e) ausbilden einer Positivelektrodenanschlussklemme auf den hervorragenden Faserpositivelektroden; und
(f) ausbilden einer Negativelektrodenanschlussklemme auf den hervorragenden Fasernegativelektroden.

2. Verfahren zur Herstellung einer Faserbatterie nach Anspruch 1, umfassend:
(c1) fixieren der Faserpositivelektroden und der Fasernegativelektroden, die abwechselnd und vertikal gestapelt sind, mittels eines Klebers nach Schritt (c).

3. Verfahren zur Herstellung einer Faserbatterie nach Anspruch 1, umfassend:
(a0) aufspreizen eines Fasertaus in einzelne Fasern, um eine einzelne Faser der Faserpositivelektrode und/oder eine einzelne Faser der Fasernegativelektrode zu erhalten, vor Schritt (a).

4. Verfahren zur Herstellung einer Faserbatterie nach Anspruch 1, wobei, in Schritt (b), jede einzelne Faser, auf der die entsprechende Aktivmaterialbeschichtung ausgebildet ist, in eine alkalische wässrige Lösung eingetaucht wird.

5. Verfahren zur Herstellung einer Faserbatterie nach Anspruch 1, wobei, in Schritt (b), Polymerschlamm zur Verwendung in der Ausbildung der Abscheiderbeschichtung auf horizontal, diagonal oder vertikal bewegte einzelne Fasern aufgebracht wird, wobei auf jeder dieser die Positivelektrodenaktivmaterialbeschichtung ausgebildet ist, und/oder auf horizontal, diagonal oder vertikal bewegte einzelne Fasern aufgebracht wird, wobei auf jeder dieser die Negativelektrodenaktivmaterialbeschichtung ausgebildet ist.

6. Verfahren zur Herstellung einer Faserbatterie nach Anspruch 5, wobei, in Schritt (b), der Schlamm mittels eines Tropfverfahrens, eines Benetzungsverfahrens oder eines Sprühverfahrens aufgebracht wird.

7. Verfahren zur Herstellung einer Faserbatterie nach Anspruch 3, umfassend:
ausbilden einer Metallbeschichtung auf jeder einzelnen Faser, die in Schritt (a0) erhalten wurde, zwischen Schritt (a0) und Schritt (a).

8. Verfahren zur Herstellung einer Faserbatterie nach Anspruch 7, wobei die Metallbeschichtung eine Nickelbeschichtung, eine Aluminiumbeschichtung oder eine Kupferbeschichtung ist.

9. Vorrichtung zur Herstellung einer Faserbatterie umfassend:
Wickelwalzen, um die jeweils Fasertaue gewickelt sind;
Faseraufspreizvorrichtungen eingerichtet, um die Fasertaue jeweils aufzuspreizen;
eine Aktivmaterialbeschichtungsausbildungsvorrichtung eingerichtet, um Faserpositivelektroden und Fasernegativelektroden mittels Ausbildung einer Positivelektrodenaktivmaterialbeschichtung oder einer Negativelektrodenaktivmaterialbeschichtung auf jeder der einzelnen Fasern zu erhalten, die durch Aufspreizen der Fasertaue erhalten wurden, wobei die einzelnen Fasern jede einen Durchmesser von 0.1 bis 100 µm haben;
eine Abscheiderbeschichtungsausbildungsvorrichtung eingerichtet, um eine Abscheiderbeschichtung auf den Faserpositivelektroden und/oder den Fasernegativelektroden auszubilden;
eine Druckschneidemaschine eingerichtet, um die Faserpositivelektroden und die Fasernegativelektroden während der vertikalen Stapelung und Pressformung der Faserpositivelektroden und der Fasernegativelektroden zu schneiden, wobei entweder eine oder beide von diesen eine darauf ausgebildete Abscheiderbeschichtung haben, wobei horizontale Endabschnitte der Faserpositivelektroden und horizontale Endabschnitte der Fasernegativelektroden gegeneinander versetzt werden, um einen Elektrodenstapel zu erhalten;
eine Positivelektrodenanschlussklemmenausbildungsvorrichtung eingerichtet, um die Faserpositivelektroden zu veranlassen, von einem Ende des Elektrodenstapels hervor zu ragen, und eine Positivelektrodenanschlussklemme auf den hervorragenden Faserpositivelektroden auszubilden;
eine Negativelektrodenanschlussklemmenausbildungsvorrichtung eingerichtet, um die Fasernegativelektroden zu veranlassen, von dem anderen Ende des Elektrodenstapels hervor zu ragen, und eine Negativelektrodenanschlussklemme auf den hervorragenden Fasernegativelektroden auszubilden.

10. Vorrichtung zur Herstellung einer Faserbatterie nach Anspruch 9, wobei die Abscheiderbeschichtungsausbildungsvorrichtung einschließt:
eine Aufbringvorrichtung eingerichtet, um Polymerschlamm zur Verwendung in der Ausbildung der Abscheiderbeschichtung aufzubringen; und
eine Harzplatte zum Transport der Faserpositivelektroden oder der Fasernegativelektroden entlang der Aufbringvorrichtung.

11. Vorrichtung zur Herstellung einer Faserbatterie nach Anspruch 10, umfassend eine Ziehklinge angeordnet stromabwärts der Aufbringvorrichtung.

12. Vorrichtung zur Herstellung einer Faserbatterie nach Anspruch 10, wobei die Harzplatte freigabebehandelt ist.

## Revendications

1. Procédé de fabrication de batterie à fibres comprenant les étapes de :
(a) l'obtention d'une électrode positive en fibre en formant un revêtement de matériau actif d'électrode positive sur une fibre individuelle ayant un diamètre de 0,1 à 100 µm, et l'obtention d'une électrode négative en fibre en formant un revêtement de matériau actif d'électrode négative sur une fibre individuelle ayant un diamètre de 0,1 à 100 µm ;
(b) la formation d'un revêtement séparateur sur l'électrode positive en fibre et/ou l'électrode négative en fibre ;
(c) l'empilage alterné et vertical des électrodes positives en fibre et des électrodes négatives en fibre, dont les unes ou les autres ou les deux d'entre elles sont revêtues avec le revêtement séparateur ;
(d) le formage à la presse vertical et la coupe d'une pile des électrodes positives en fibre et des électrodes négatives en fibre, avec des positions d'extrémité horizontales des électrodes positives en fibre et des positions d'extrémité horizontales des électrodes négatives en fibre déplacées les unes par rapport aux autres, pour obtenir une pile d'électrodes de sorte que les électrodes positives en fibres sont en saillie à partir d'une extrémité de la pile d'électrodes et que les électrodes négatives en fibre font saillie à partir de l'autre extrémité de la pile d'électrodes ;
(e) la formation d'une borne d'électrode positive sur les électrodes positives en fibre en saillie ; et
(f) la formation d'une borne d'électrode négative sur les électrodes négatives en fibre en saillie.

2. Procédé de fabrication de batterie à fibres selon la revendication 1, comprenant :
(c1) la fixation des électrodes positives en fibre et des électrodes négatives en fibres, lesquelles sont empilées en alternance et verticalement, au moyen d'un adhésif après l'étape (c).

3. Procédé de fabrication de batterie à fibres selon la revendication 1, comprenant :
(a0) le déploiement d'un faisceau de fibres en fibres individuelles pour obtenir la fibre individuelle de l'électrode positive en fibre et/ou la fibre individuelle de l'électrode négative en fibre avant l'étape (a).

4. Procédé de fabrication de batterie à fibres selon la revendication 1, dans lequel, à l'étape (b), chaque fibre individuelle sur laquelle le revêtement de matériau actif respectif est formé est immergée dans une solution aqueuse alcaline.

5. Procédé de fabrication de batterie à fibres selon la revendication 1, dans lequel, à l'étape (b), une bouillie polymère pour une utilisation dans la formation du revêtement séparateur est appliquée sur des fibres individuelles se déplaçant horizontalement, diagonalement ou verticalement sur chacune desquelles est formé le revêtement de matériau actif d'électrode positive, et/ou sur des fibres individuelles se déplaçant horizontalement, diagonalement ou verticalement sur chacune desquelles est formé le revêtement de matériau actif d'électrode négative.

6. Procédé de fabrication de batterie à fibres selon la revendication 5, dans lequel, à l'étape (b), la bouillie est appliquée selon un procédé d'égouttage, un procédé de ruissellement, ou un procédé de pulvérisation.

7. Procédé de fabrication de batterie à fibres selon la revendication 3, comprenant :
la formation d'un revêtement métallique sur chaque fibre individuelle obtenue à l'étape (a0), entre l'étape (a0) et l'étape (a).

8. Procédé de fabrication de batterie à fibres selon la revendication 7, dans lequel le revêtement métallique est un revêtement de placage en nickel, un revêtement de placage en aluminium, ou un revêtement de placage en cuivre.

9. Appareil de fabrication de batterie à fibres comprenant :
des rouleaux d'enroulement autour desquels des faisceaux de fibres sont enroulés, respectivement ;
des appareils de déploiement de fibres configurés pour déployer les faisceaux de fibres, respectivement ;
un appareil de formation de revêtement de matériau actif configuré pour obtenir des électrodes positives en fibre et des électrodes négatives en fibre en formant un revêtement de matériau actif d'électrode positive ou un revêtement de matériau actif d'électrode négative sur chacune des fibres individuelles qui sont obtenues en déployant les faisceaux de fibres, les fibres individuelles ayant chacune un diamètre de 0,1 à 100 µm ;
un appareil de formation de revêtement séparateur configuré pour former un revêtement séparateur sur les électrodes positives en fibre et/ou les électrodes négatives en fibre ;
un dispositif de coupe de mise sous pression configuré pour couper les électrodes positives en fibre et les électrodes négatives en fibre tout en empilant verticalement et formant à la presse les électrodes positives en fibre et les électrodes négatives en fibre, dont les unes ou les autres ou les deux ont le revêtement séparateur formé sur celles-ci, avec des positions d'extrémité horizontales des électrodes positives en fibre et des positions d'extrémité horizontales des électrodes négatives en fibre déplacées les unes par rapport aux autres, pour obtenir une pile d'électrodes ;
un appareil de formation de borne d'électrode positive configuré pour faire en sorte que les électrodes positives en fibre fassent saillie à partir d'une extrémité de la pile d'électrodes, et former une borne d'électrode positive sur les électrodes positives en fibre en saillie ; et
un appareil de formation de borne d'électrode négative configuré pour faire en sorte que les électrodes négatives en fibre fassent saillie à partir de l'autre extrémité de la pile d'électrodes, et former une borne d'électrode négative sur les électrodes négatives en fibre en saillie.

10. Appareil de fabrication de batterie à fibres selon la revendication 9, dans lequel l'appareil de formation de revêtement séparateur inclut :
un appareil d'application configuré pour appliquer une bouillie polymère pour une utilisation pour la formation du revêtement séparateur ; et
une feuille en résine pour acheminer les électrodes positives en fibre ou les électrodes négatives en fibre le long de l'appareil d'application.

11. Appareil de fabrication de batterie à fibres selon la revendication 10, comprenant un grattoir disposé en aval de l'appareil d'application.

12. Appareil de fabrication de batterie à fibres selon la revendication 10, dans lequel la feuille de résine est soumise à un traitement de décollage.
